# EUROPÄISCHE PATENTSCHRIFT

(11) **EP 3 615 341 B1**
(45) Veröffentlichungstag und Bekanntmachung des Hinweises auf die Patenterteilung: **24.08.2022**
(21) Anmeldenummer: 18720226.2
(22) Anmeldetag: 25.04.2018
(51) Int. Cl.: B41J 2/21, B05D 3/06, B05D 5/00, B05D 5/06, B05D 3/00, B41M 7/00, B41F 23/08, B41J 11/00, D21H 19/00, B33Y 50/00, B29C 64/00, B65H 16/00

(54) **VORRICHTUNG UND VERFAHREN ZUM ERZEUGEN EINER TEXTURIERTEN BESCHICHTUNG**
DEVICE AND METHOD FOR PRODUCING A TEXTURED COATING
DISPOSITIF ET PROCÉDÉ PERMETTANT DE PRODUIRE UN REVÊTEMENT TEXTURÉ

(30) Priorität: 28.04.2017 DE 102017109182
(43) Veröffentlichungstag der Anmeldung: 04.03.2020
(73) Patentinhaber: ACTEGA Schmid Rhyner AG, 8134 Adliswil (CH)
(72) Erfinder: SCHLATTERBECK, Dirk, 9504 Friltschen (CH); RÜEDI, Roland, 8820 Wädenswil (CH)
(74) Vertreter: Blumbach · Zinngrebe Patentanwälte PartG mbB
(86) Internationale Anmeldenummer: PCT/EP2018/060534
(87) Internationale Veröffentlichungsnummer: WO 2018/197531

(56) Entgegenhaltungen:
- EP-A1- 2 660 067
- EP-A2- 2 178 352
- DE-A1-102007 022 919
- DE-A1-102010 036 454
- DE-A1-102013 112 404

## Beschreibung

Die Erfindung betrifft ein Verfahren sowie eine Vorrichtung zum Erzeugen einer texturierten Beschichtung.

### Hintergrund der Erfindung

In den letzten Jahren hat die Bedeutung einer dreidimensionalen Ausgestaltung beschichteter Oberflächen zunehmend an Bedeutung gewonnen. Beispielsweise ist es bekannt, auf einer beschichteten Oberfläche Bereiche mit unterschiedlichen haptischen und/oder visuellen Eigenschaften, beispielsweise hinsichtlich Matt- oder Glanzeffekten, zu erzeugen. Lackschichten mit dreidimensionale Ausgestaltung sind beispielsweise aus dem europäischen Patent EP 0 741 370 B2 bekannt. Beschrieben wird hier eine Lackschicht, in welche Beugungsstrukturen eingebracht sind, welche als Sicherheitselement beispielsweise für fälschungssichere Dokumente wie Ausweise dienen können. Die Strukturen in der Lackschicht können beispielhaft durch Prägen oder Abformen erhalten werden.

Weiterhin beschreibt das europäische Patent EP 2 178 352 B2 ein Verfahren sowie eine Vorrichtung zur akkuraten Auftragung von Strukturen auf ein Substrat. Hierbei wird in einem Abtastschritt eine bereits auf ein Substrat aufgebrachte Struktur detektiert und ihre räumliche Anordnung festgestellt und anschließend ein Lack mittels eines Tintenstrahldruckschritts aufgebracht, wobei der Lack auf vorbestimmten Stellen aufgebracht wird, welche in Abhängigkeit der Bestimmung des Ortes der zuvor aufgebrachten Struktur bestimmt werden.

Auch sind verschiedene Verfahren bekannt, um unterschiedliche haptische (also tastsensorische) und/oder visuelle Eigenschaften, also beispielsweise Matt-Glanzeffekte, mit ein und demselben Beschichtungssystem zu erzeugen.

So ist beispielsweise die als "Chemical Embossing" oder "Drip-Off-Lackierung" bezeichnete Methode bekannt, bei welcher ein bereichsweise unterschiedlich vorbehandeltes Substrat mit einem UV-Lack belegt wird.

Auch kann ein ursprünglich homogener Lackfilm durch eine Schablone bereichsweise unterschiedlich behandelt werden, beispielsweise, indem ein lediglich lokales Ätzen oder Sandstrahlen erfolgt.

Ebenfalls bekannt ist die zumindest partielle Erzeugung einer Rauigkeit in einem noch flüssigen Lackfilm mit Hilfe energiereicher Strahlung. Beispielsweise beschreibt die deutsche Patentanmeldung DE 10 2006 042 063 A1 ein Verfahren zur Einstellung des Glanzgrades von Oberflächen, welche durch Beschichtung mit UV- oder elektronenstrahlhärtbaren Lacken erhalten werden. Hierbei wirkt zunächst kurzwellige monochromatische UV-Strahlung auf eine Beschichtung ein, so dass es lediglich in deren Oberflächenschicht zu einer Polymerisation und Vernetzung kommt. In einem weiteren Schritt wirkt elektromagnetische Strahlung mit einer anderen, höheren Wellenlänge auf die Lackschicht ein, so dass eine Vernetzung über die gesamte Dicke erfolgt und die Schicht aushärtet. Auf diese Weise wird in der Oberflächenschicht eine Mikrofaltung hervorgerufen, die durch die nachfolgende Aushärtung der gesamten Schicht fixiert wird.

In Weiterentwicklung dieses Verfahren beschriebt die europäische Patentanmeldung EP 2 418 091 A1 ein Verfahren, bei welchen es lediglich in Teilbereichen der Lackoberfläche zu einer Mikrofaltung kommt, während in anderen Bereichen der Lackoberfläche eine glatte Oberfläche ausgebildet wird. Dazu erfolgt lediglich in Teilbereichen der Lackoberfläche die Beaufschlagung mit der zur Mikrofaltung notwendigen kurzwelligen Strahlung. Die Strahlquelle ist jedoch so ausgestaltet, beispielsweise durch eine Schablone oder Maske, dass in anderen Teilbereichen der Oberfläche keine Belichtung mit der zur Mikrofaltung notwendigen Strahlung erfolgt. Auf diese Weise werden nebeneinander Oberflächen mit mikrogefalteter, beispielsweise rauer, und nicht mikrogefalteter, beispielsweise glatter und/oder hochglänzender Oberfläche erhalten.

Es sind somit also Verfahren bekannt, um Oberflächeneffekte lediglich lokal in Beschichtungen einzubringen, beispielsweise durch Mikrofaltung von Oberflächen, welche lediglich lokal eingebracht wird.

Schwierigkeiten bestehen jedoch darin, die Bereiche, in welchen ein bestimmter Effekt erzeugt werden soll, zu bestimmen, umanschließend ortsabhängig entsprechende Texturen zu erzeugen. Dies bereitet besonders dann Schwierigkeiten, wenn ein flächiger visueller Auftrag besonders viele unterschiedliche, insbesondere auch sehr feine Strukturen, umfasst, wie dies beispielhaft in fotographischen Abbildungen häufig der Fall ist. Insbesondere besteht daher ein Bedarf an einem Verfahren sowie einer Vorrichtung zum Erzeugen einer texturierten Beschichtung, insbesondere an einem Verfahren sowie einer Vorrichtung zum ortsaufgelösten, vorzugsweise lateral ortsaufgelösten, Erzeugen einer texturierten Beschichtung, vorzugsweise zum ortsaufgelösten Erzeugen einer ortsabhängig, vorzugsweise einer lateral ortsabhängig, texturierten Beschichtung.

Weiterhin beschreiben DE102007022919A1, DE102010036454A1 und DE102013112404A1 relevanten Stand der Technik.

### Aufgabe der Erfindung

Die Aufgabe der Erfindung besteht in der Bereitstellung eines Verfahrens sowie einer Vorrichtung zum Erzeugen einer texturierten Beschichtung.

### Zusammenfassung der Erfindung

Die Aufgabe der Erfindung wird gelöst durch den Gegenstand der unabhängigen Ansprüche. Bevorzugte Ausführen der Erfindung finden sich in den abhängigen Ansprüchen.

Das Verfahren zum Erzeugen einer texturierten Beschichtung gemäß Anspruch 1 enthält die in den beiliegenden Ansprüchen veröffentlichten Schritte a. - i.

Gemäß einer Ausführungsform der Erfindung ist nach Schritt d. die vorzugsweise mittels eines informatischen Mittels mindestens eine zu erzeugende Textur veränderbar und/oder wird verändert. Dies kann beispielsweise bedeuten, dass nachträglich manuell oder auch automatisiert, beispielsweise durch eine digitale Zuweisung einer bestimmten Textur durch eine zweite, andere Textur, ersetzt wird. So kann es beispielsweise gewünscht sein, anstelle einer glatten, glänzenden Textur, wie sie beispielsweise für den Schnee auf der fotographischen Darstellung eines schneebedeckten Berggipfels möglich ist, eher eine leicht grisselige, eher matte Textur oder gar eine an Eisblumen erinnernde Textur zu erzeugen. Auch kann es erwünscht sein, bei der Darstellung einer metallischen Oberfläche diese abweichend vom visuell "glänzenden" Eindruck, welcher gleichfalls einer glatten, glänzenden Beschichtungstextur entspräche, eher mit einer an Kristalle erinnernde Oberflächentextur entsprechend beispielsweise der Darstellung einer feuerverzinkten Oberfläche zu geben.

Gemäß einer Ausführungsform der Erfindung weist die mindestens eine Textur in dem mindestens einen Bereich der flächigen Darstellung einen visuellen und/oder haptischen Eindruck auf, welcher sich von dem visuellen und/oder haptischen Eindruck in einem anderen Bereich der flächigen Darstellung unterscheidet. Mit anderen Worten weist also gemäß dieser Ausführungsform des Verfahrens die flächige Darstellung unterschiedliche Bereiche auf, welche unterschiedliche Texturen aufweisen. Unter dem visuellen Eindruck einer Textur ist dabei dessen visuelles Erscheinungsbild zu verstehen, also insbesondere, ob diese Textur ein eher matte oder ein eher glänzendes Erscheinungsbild aufweist. Der haptische Eindruck ist wiederum der tastsensorische Eindruck einer Textur, beschreibt also beispielsweise deren Rauigkeit oder Glattheit.

Erfindungsgemäß umfasst das Verfahren zusätzlich den Schritt des Bereitstellens einer Unterlage, deren Oberfläche mit der flächigen Darstellung belegt oder in deren Oberfläche die visuelle Darstellung eingebracht ist oder einzubringen ist, wobei die flächige Darstellung in Form einer Bilddatei vorliegt.

Erfindungsgemäß umfasst das Verfahren das Aufbringen der flächigen Darstellung auf die Oberfläche der Unterlage oder in die Oberfläche der Unterlage. Dies kann beispielsweise dann erfolgen, wenn die flächige Darstellung nicht in verkörperter Form, sondern lediglich als Datensatz vorliegt.

Erfindungsgemäß umfasst das Verfahren das Scannen der flächigen Darstellung, um einen digitalisierten Datensatz zu erhalten. Dies ist beispielsweise dann vorteilhaft, wenn die flächige Darstellung zunächst nicht digitalisiert in Form eines Datensatzes vorliegt, sondern lediglich in verkörpert Form. Beispielsweise ist es in diesem Fall möglich, zunächst die flächige Darstellung einzuscannen, um einen digitalisierten Datensatz zu erhalten, welcher anschließend ausgewertet wird, und anschließend fluides Beschichtungsmaterial bereitzustellen, welches basierend auf der Auswertung des Datensatzes auf einen Teilbereich der visuellen Darstellung ortsabhängig aufgetragen wird. Erfindungsgemäß wird hierbei zusätzlich zur Farbinformation der flächigen Darstellung die Oberflächentextur und/oder das Oberflächenrelief und/oder das Höhenprofil der flächigen Darstellung erfasst und in eine mit der Beschichtungseinheit übertragbaren Texturinformation übersetzt. Es ist dadurch möglich, beispielsweise ein Gemälde mit einem starken Höhenrelief (beispielsweise ein Ölbild mit starkem Auftrag der Ölfarbe) einzuscannen, wobei sowohl Farb- als auch Textur- und Reliefinformationen der flächigen Darstellung, hier in Form eines Gemäldes, mittels eines Scanners erfasst und digitalisiert werden. Sodann wird basierend auf diesem digitalisierten Datensatz zunächst durch Auswerten der Farbinformation und einem darauf basierenden Farbauftrag und sodann in einem weiteren Schritt durch Auswerten der Textur- und Reliefinformation eine Beschichtung so aufgetragen werden, dass für den Betrachter optisch und haptisch wieder der Eindruck des Originalgemäldes entsteht. Mit dem Verfahren kann somit nicht nur eine Textur, sondern auch ein Oberflächenrelief einer Beschichtung auf einer flächigen Darstellung erzeugt werden.

Es ist hierbei also möglich, dass die Struktur passend zur auf dem Ausgangsbild gegebenen, ggf. auch inline erzeugten Bildinformation, aufgetragen wird. Dieses inline erfolgende Erzeugen einer Bildinformation beinhaltet erfindungsgemäß dass die Bildinformation durch Einscannen einer Vorlage bzw. eines Originals erfolgt. Es ist aber auch möglich, diese Bildinformation bereitzustellen, indem eine digitale Datei, beispielsweise umfassend ortsaufgelöste und/oder ortsabhängige Farbinformationen einer flächigen Darstellung sowie zusätzlich auch Informationen zum Oberflächenrelief, bereitgestellt wird. Erfindungsgemäß ist es möglich, dass anhand des Einscannens einer Vorlage und zeitlich nach dem Einscannen durch Auswertung dieser Vorlage mittels eines informatischen Mittels Texturinformationen erst erzeugt werden, und zwar in der Form, dass durch die Auswertung der Vorlage eine passende Texturinformation ausgewählt wird. Dies kann durch ein geeignetes Auswerteprogramm erfolgen, aber auch durch einen Bedienereingriff ausgewählt oder - nach einer Vorauswahl durch ein informatisches Mittel, beispielsweise durch ein auf einem Computer gespeichertes Auswerteprogramm - von einem Bediener geändert werden.

Erfindungsgemäß erfolgt das Scannen durch einen Scanner, der neben der reinen Bildinformation auch noch das Höhenprofil einer Vorlage mit aufnimmt, so dass direkt eine 3D-Information beispielsweise der Textur einer Oberfläche miterfasst werden kann. Auf diese Weise kann mit einer Digitaldruckmaschine nicht nur ein Bild erzeugen, sondern auch die weitere Ausgestaltung, insbesondere der Textur einer Oberfläche.

Beispielhaft kann ein Scan von einem Cruse Scanner der Firma Cruse Spezialmaschinen GmbH erstellt werden.

Sofern eine Vielzahl von gleichen flächigen Darstellungen, welche beispielsweise in verkörperter Form vorliegen, wie in Form von Druckbögen, nacheinander ortsaufgelöst mit einem fluiden Beschichtungsmaterial belegt wird, so dass ortsabhängig in mindestens einem Bereich der flächigen Darstellung eine texturierte Beschichtung erhalten wird, kann beispielsweise die erste dieser Vielzahl gleicher flächiger Darstellungen gescannt werden. Auf die nachfolgenden flächigen Darstellungen erfolgt dann ausgehend von der Auswertung des Datensatzes, welcher durch den Scan der ersten flächigen Darstellung erhalten wurde, in entsprechender Weise der Auftrag des fluiden Beschichtungsmaterials sowie die Texturierung der Beschichtung der nachfolgenden flächigen Darstellungen.

Das Scannen erfolgt erfindungsgemäß mit einem Farbsensor, insbesondere umfassend eine UV-Laserdiode. Ein solcher Farbsensor umfasst in der Regel eine Beleuchtungsquelle, insbesondere eine breitbandige Beleuchtungsquelle, welche insbesondere im Bereich des sichtbaren Lichts emittiert. Übliche Farbsensoren sind in der Lage, im sichtbaren Spektralbereich, also im Bereich von 200 nm bis 800 nm, Farben und Farbunterschiede zu erkennen und Farbmaßzahlen zu erzeugen.

Erfindungsgemäß erfolgt solch eine Detektion ortsaufgelöst. In der Regel arbeiten übliche Farbsensoren in einem Dreifarbraum, so dass beispielsweise Farbdaten für einen Bildpunkt oder Pixel in Form eines sogenannten RGB-Wertes erhalten werden. Um die Kompatibilität solcher RGB-Werte mit anderen Farbwerten, beispielsweise L*a*b*-Werten des CIEL*a*b*-Systems oder anderer Farbsysteme herzustellen, erfolgt daher gemäß einer weiteren Ausführungsform der Erfindung ein Schritt des Umrechnens der ermittelten Farbwerte aus einem Farbsystem, bevorzugt einem Farbsystem aus einem Dreifarbraum, in ein anderes Farbsystem.

Gemäß einer Ausführungsform der Erfindung erfolgt während des Scanvorgangs das Festlegen einer Pixelgröße. Diese Pixelgröße bestimmt die Auflösung der Auswertung der Bilddaten und wird für die Erzeugung einer ortsabhängig erzeugten Textur beibehalten oder gegebenenfalls noch verbessert. Insbesondere wird diese Pixelgröße für den Auftrag eines fluiden Beschichtungsmaterials und/oder bei der ortsabhängigen, vorzugsweise lateral ortsabhängigen, Erzeugung einer Textur der Beschichtung, beispielsweise der Lackierung, beibehalten oder verbessert. Die Auflösung beträgt zwischen 600 dpi bis 1200 dpi. Die Tropfen der vorzugsweise mittels Ink-Jet aufgetragenen Beschichtung weisen Tröpfchenvolumina von einigen 10 pl bis hinunter 3 pl (Picoliter), ggf. auch noch kleiner. Die Tröpfchen mit 3 pl Volumen haben einen Durchmesser von 18 µm. Das Tröpfchenvolumen korreliert mit dem Durchmesser (in dritter Potenz). Bei einem Tröpfchenvolumen von 6 pl werden bereits 23 µm Durchmesser erhalten. Für die Ausbreitung der Tröpfchen auf dem Substrat spielt allerdings auch das Substrat selbst noch eine gewisse Rolle, so dass die Tröpfchendurchmesser auf dem Substrat durchaus unterschiedlich groß ausfallen können. Die Abstände der erzeugten Tropfen sind bei diesen Auflösungen die minimalen Düsenabstände. Das entspricht ca. 45 µm bei 600 dpi bzw. 23 µm bei 1200 dpi. Es ist davon auszugehen, dass mit der Weiterentwicklung Tropfen von 1 pl Volumen und weniger realisiert werden, mithin in der Zukunft auch noch kleinere Durchmesser erzielt werden können, wobei als untere Grenze hier ein Tröpfchenvolumen von 0,1 pl angenommen werden kann.

Die besondere Wirkung der Beschichtung zur Erzeugung einer ortsaufgelösten und ortsabhängigen Textur kann darüber hinaus auch darin liegen, dass durch den Brechungsindex der Beschichtung, welcher zwischen 1,47 und 1,6 für herkömmliche Lacke beispielsweise auf Acrylatbasis angenommen werden kann, ggf. sogar eine mikrolinsenartige Wirkung der Beschichtung erzielt und so die Sichtbarkeit besonderer Strukturen der flächigen Darstellung verfahrensgemäß erhöht werden kann.

Besonders zu erwähnen sind erfindungsgemäß Scanner, bei denen neben der Farbinformation des Bildes zusätzlich noch eine Reliefinformation, wobei als Reliefinformation hier das dreidimensionale Höhenprofil, also den Verlauf der Höhenlinien eines Beschichtungsauftrags der flächigen Darstellung meint, erfasst wird. Diese wird z.B. als zusätzliches Graustufenbild erfasst. Auf diese Weise lassen sich Texturen erfassen, die beispielsweise in Form eines Gewebes oder eines Riffelblechs vorliegen können. Außerdem ist es möglich, ein in Ölfarbe gemaltes Gemälde mit einem derartigen Scanner einscannen und den Pinselstrich des Künstlers, also die Farbschichtdicke, zusätzlich zur Farbinformation erfassen. Beim letzten Beispiel ließe sich ein

Farbdruck erzeugen, dem mit Hilfe einer erfindungsgemäß farblosen Beschichtung mit lateral unterschiedlicher Schichtdicke analog dem Graustufenbild des Höhenprofils zusätzlich zur Farbe der Pinselstrich wieder aufgeprägt würde. Auf diese Weise könnten z.B. digitale Reproduktionen von Kunstgemälden erzeugt werden. Andere Anwendungen wären beispielsweise die Erzeugung von Gewebemustern in Katalogen, bei denen beispielsweise Polsterbezüge realitätsnah wiedergegeben werden sollen.

Erfindungsgemäß erfolgt das Scannen durch einen Scanner, der neben der reinen Bildinformation auch noch das Höhenprofil einer Vorlage mit aufnimmt, so dass direkt eine 3D-Information beispielsweise der Textur einer Vorlage miterfasst werden kann. Auf diese Weise kann man mit einer Digitaldruckmaschine (d.h. einer Druckmaschine, die nach dem Ink-Jet-Verfahren arbeitet) nicht nur ein Bild erzeugen, sondern erfindungsgemäß auch die weitere Ausgestaltung, insbesondere die Textur einer Oberfläche.

Beispielhaft kann ein Scan von einem Cruse Scanner der Firma Cruse Spezialmaschinen erstellt werden.

Das Erzeugen der Textur erfolgt erfindungsgemäß sowohl durch eine ortsabhängig, vorzugsweise eine lateral ortsabhängig, eingestellte Dicke der Beschichtung und/oder alternativ, jedoch nicht erfindungsgemäß, durch eine ortsabhängig, vorzugsweise lateral ortsabhängig, vorgenommene Vorbehandlung der zu belegenden Oberfläche und/oder - wiederum erfindungsgemäß - durch eine ortsabhängige, vorzugsweise lateral ortsabhängige, Nachbehandlung der erzeugten Beschichtung bzw. des erzeugten Beschichtungsfilms, also einer erzeugten Lackierung bzw. eines erzeugten Lackfilms.

Erfindungsgemäß umfasst das fluide Beschichtungsmaterial einen radikalisch härtbaren Lack, erfindungsgemäß einen UV-härtbaren Lack, welcher so ausgestaltet ist, dass sich die Reaktivität an der Oberfläche des aufgetragenen Beschichtungsfilms von der Reaktivität im Volumen des aufgetragenen Beschichtungsfilms gezielt unterscheidet.

Erfindungsgemäß das Verfahren einen Schritt des Härtens des aufgetragenen fluiden Beschichtungsmaterials. Das Härten erfolgt dabei ortsabhängig. Dabei ist die Dauer des Härtens und/oder die Art des Härtens in unterschiedlichen Bereichen einer aufgebrachten Beschichtung und/oder zwischen in unterschiedlichen Teilbereichen der aufgebrachten Beschichtungen jeweils an die Art der zu erzeugenden Textur angepasst. Auf diese Weise ist es möglich, ortsabhängig in unterschiedlichen Bereichen eine jeweils an die entsprechende Struktur der flächigen Darstellung angepasste Textur zu erzeugen. Ist beispielsweise die flächige Darstellung in Form einer Fotographie eines winterlichen Hauses ausgebildet, ist es beispielsweise möglich, an den Fensterflächen des Hauses eine Beschichtung zu erzeugen und in einem Teilbereich der Abbildungen der Fenster, welche Eisblumen zeigen, einen eisblumenartigen Effekt zu erzeugen, wohingegen nicht mit Eis bedeckte Bereiche eines Fensters eine Hochglanzanmutung zeigen. In diesem Fall ist es beispielsweise möglich, dass das fluide Beschichtungsmaterial über die gesamte Fläche der Darstellung der Fenster die gleiche Dicke aufweist, jedoch die Härtung in unterschiedlichen Bereichen unterschiedlich erfolgt.

Es ist aber auch möglich, dass ortsaufgelöst eine unterschiedliche Dicke des Beschichtungsfilms erzeugt wird, und anschließend die Härtung in beiden Bereichen in derselben Form, aber auch unterschiedlich erfolgt.

Gemäß einer Ausführungsform des Verfahrens erfolgt das Bestrahlen der Beschichtung vollflächig in gleicher Form, wobei in den unterschiedlichen Bereichen eine unterschiedliche Mikrofaltung in Abhängigkeit von der ortsaufgelöst und/oder ortsabhängig unterschiedlichen Schichtdicke der Beschichtung erhalten wird. Dabei ist es auch möglich, dass ein Bereich keinerlei Mikrofaltung aufweist.

Bei einer besonders bevorzugten Ausführungsform wird nur die Schichtdicke variiert und erfolgt das Härten über die gesamte Fläche der flächigen Darstellung so, dass die gleiche Leistung in die Beschichtung eingebracht wird. Beispielsweise erfolgt das Härten bevorzugt über die gesamte Fläche der flächigen Darstellung mittels eines Quecksilber-Mitteldruckstrahlers. In diesem Fall ist es möglich, dass lediglich in Abhängigkeit von einer ortsabhängigen, vorzugsweise lateral ortsabhängigen, unterschiedlichen Dicke der Beschichtung sich das Härten unterschiedlich vollzieht, indem beispielsweise in einem Bereich mit einer größeren Schichtdicke von beispielsweise 12 µm und mehr Mikrofaltung auftritt, während in einem Bereich mit einer geringeren Schichtdicke von beispielsweise weniger als 10 µm keinerlei Mikrofaltung erhalten wird. Mit anderen Worten kann somit lediglich durch die lateral unterschiedliche Schichtdicke bei ansonsten gleicher Nachbehandlung, insbesondere bei ansonsten gleicher Härtung in der Beschichtung eine unterschiedliche Oberflächentextur erhalten werden.

Gemäß dieser Ausführungsform ist die Dicke des aufgebrachten Beschichtungsmaterials ortsaufgelöst, vorzugsweise lateral ortsaufgelöst, unterschiedlich und erfolgt das Härten so, dass über die gesamte Fläche der flächigen Darstellung die gleiche Leistung in die Beschichtung eingebracht ist, vorzugsweise mittels eines Quecksilber-Mitteldruckstrahlers.

Erfindungsgemäß wird zum Bestrahlen der Beschichtung UV-C-Strahlung mit einer Wellenlänge von 240 nm und mehr in mindestens einem zu texturierenden Bereich in die Oberflächenschicht der Beschichtung eingebracht.

Erfindungsgemäß erfolgt das Bestrahlen dabei ortsabhängig zweischrittig in der Form, dass in einem Teilbereich des auf mindestens einen Bereich der flächigen Darstellung aufgebrachten fluiden Beschichtungsmaterials in einem ersten Schritt eine kleinere UV-Dosis eingestrahlt wird, welche Mikrofaltung erzeugt, und in einem zweiten Schritt die Schicht im Teilbereich des fluiden Beschichtungsmaterials vollständig durchgehärtet wird, wobei für beide Härtungsschritte längerwellige UV-Strahlung, wie diejenige eines UV-Mitteldruckstrahlers, verwendet wird, so dass in dem bestrahlten Teilbereich der Beschichtung eine vorbestimmte Textur der Oberfläche der Beschichtung erhalten wird, welche von der Textur oder den Texturen der Oberfläche anderer Teilbereiche der Beschichtung oder in anderen Teilbereichen der flächigen Darstellung aufgebrachten Beschichtungen abweicht. "Längerwellige UV-Strahlung" bezieht sich hier darauf, dass für Mikrofaltung bislang insbesondere Excimer-Strahlung verwendet wird, welche - im Vergleich zu der hier genannten Strahlung eines UV-Mitteldruckstrahlers - kürzerwellig ist.

Gemäß einer alternativen, nicht erfindungsgemäßen Ausführungsform werden in einem Bestrahlungsschritt sowohl die Mikrofaltung als auch das Durchhärten erreicht. Dabei ist das Beschichtungsmaterial bevorzugt so ausgestaltet, dass die Absorption von UV-Strahlung über die Schichtdicke der aufgetragenen Schicht des fluiden Beschichtungsmittels variiert.

Gemäß einer nochmals weiteren Ausführungsform der Erfindung erfolgt das Bestrahlen sowohl der Oberflächenschicht als auch das Bestrahen zum Aushärten der Beschichtung jeweils mittels eines Quecksilber-Mitteldruckstrahlers.

Bevorzugt erfolgt dabei das ortsabhängige Bestrahlen der Oberflächenschicht zur Mikrofaltung in mindestens einem Teilbereich mittels eines ortsaufgelösten Abrasterns der Beschichtungsoberfläche.

Besonders bevorzugt ist eine Ausführungsform des Verfahrens, bei welcher das Abrastern scannend erfolgt, indem zeilenweise die Oberfläche überfahren wird und weiterhin die Zeile in einzelne Bildpunkte oder Pixel unterteilt ist und jede Zeile jeweils einem Vorschub des Scankopfes zugeordnet ist. Besonders bevorzugt entspricht dabei die Pixelgröße der Größe der Pixel, welche beim Scanvorgang der flächigen Darstellung ermittelt wurde, oder ist sogar gegenüber dieser nochmals verbessert, weist also der Scankopf für das ortsabhängige Bestrahlen eine größere Auflösung als der Scankopf des Farbsensors auf.

Gemäß einer weiteren Ausführungsform der Erfindung erfolgt die Bestrahlung durch UV-Strahlung unter Inertgasatmosphäre, bevorzugt unter Stickstoffatmosphäre.

Dabei ist gemäß einer nochmals bevorzugten Ausführungsform der Erfindung der Restsauerstoffgehalt kleiner als 5000 ppm, bevorzugt kleiner als 1000 ppm und besonders bevorzugt kleiner als 500 ppm.

Gemäß einer weiteren Ausführungsform der Erfindung erfolgt das Auftragen des fluiden Beschichtungsmaterials durch einen Druckprozess, insbesondere mittels Tiefdruck, Flexodruck, Siebdruck, Tampondruck oder Inkjet-Druck. Besonders bevorzugt wird die Beschichtung mittels Inkjet-Technologie vorgenommen. Mit diesem Verfahren ist es besonders einfach, unterschiedliche Schichtdicke des Beschichtungsmaterials in verschiedenen Bereichen auf der Oberfläche in einem Durchgang zu erzeugen.

Ein weiterer Aspekt der Erfindung betrifft das Bereitstellen einer Vorrichtung zum Erzeugen einer texturierten Beschichtung gemäß Anspruch 12, umfassend Merkmale a-i.

Die Vorrichtung zum Aushärten nach Merkmal i. kann jedoch alternativ, d.h. nicht erfindungsgemäß, so ausgestaltet sein, dass das Aushärten einschrittig erfolgt. In diesem Fall kann das Aushärten ortsabhängig der Beschichtung ortsabhängig unterschiedlich erfolgen, wenn die Beschichtung ortsabhängig und/oder ortsaufgelöst insbesondere eine unterschiedliche Schichtdicke aufweist. Es ist alternativ, d.h. nicht erfindungsgemäß, auch möglich, dass die Vorrichtung zum Aushärten zwei UV-Strahler umfasst, welche UV-Strahlen unterschiedlicher Wellenlänge aussenden, so dass sich auf diese Weise das Aushärten zweischrittig vollzieht, wobei bedarfsweise lediglich der eine oder der andere Strahler zum Einsatz kommt.

Die Anlagensteuerung umfasst bevorzugt auch ein Mittel, um Parameter in einem informatischen Format, welches in der Druckindustrie allgemein verwendet wird, beispielsweise JDF (Job Definition Format) auszulesen und in Verfahrensschritte umzusetzen. Beispielhaft kann ein solches Mittel eine auf einem Speicher abgelegte Parametrisierungsdatei umfassen.

Gemäß einer weiteren Ausführungsform der Erfindung umfasst die Vorrichtung zumindest jeweils einen Sensor sowie einen Encoder und Aktoren, um die jeweiligen Verfahrensschritte sensorisch zu erfassen und gesteuert durch den Computer mittels entsprechender Aktoren jeweils umzusetzen.

Gemäß einer nochmals weiteren alternativen und nicht erfindungsgemäßen Ausführungsform umfasst die Vorrichtung eine Einrichtung zur digitalen Veredlung mit Prägefolien. Hier wird digital ein Klebstoff ortausgelöst, vorzugsweise lateral ortsaufgelöst und ggf. auch mit unterschiedlichen Schichtdicken auf das Substrat oder eine Prägefolie aufgebracht und anschließend die Prägefolie partiell übertragen. Beispielsweise ist die Prägefolie eine PET-Trägerfolie mit einer mehrlagigen Beschichtung, bei der eine Schicht einer Aluminiumbedampfung umfasst, die durch eine eingefärbte Schicht nach der Übertragung auch goldfarben sein kann oder andere Metallic-Effekte umfassen kann. Hier können auch andere Effekte übertragen werden wie Hologramme oder andere Interferenzstrukturen).

Die Vorrichtung kann weiterhin auch als kompaktes Gerät ausgestaltet sein, welches beispielsweise für Heimanwendungen oder in einem Kopierladen verwendet werden kann.

Die Erfindung wird nachfolgend anhand bevorzugter Ausführungsformen, welche auch als Beispiele bezeichnet werden und unter Bezugnahme auf die beigefügten Zeichnungen detaillierter beschrieben.

Es zeigen:
Figur 1 in schematischer Darstellung eine Ausführungsform einer Vorrichtung 1 zum Erzeugen einer texturierten Beschichtung auf einer Unterlage,
Figur 2 eine weitere schematische Darstellung einer Vorrichtung 1 gemäß einer weiteren bevorzugten Ausführform,
Fig. 3 in schematischer Darstellung eine flächige Darstellung mit ortsaufgelöst, vorzugsweise lateral ortsaufgelöst, unterschiedlichen Texturen.

### Beschreibung bevorzugter Ausführungsformen

Im Rahmen der vorliegenden Erfindungen geltenden folgende Definitionen:

### Lack

Unter einem Lack wird im Rahmen der vorliegenden Anmeldung ein fluides, beispielsweise flüssiges oder pastöses, Beschichtungsmaterial verstanden, mittels welchem eine Schicht auf eine Unterlage aufgebracht wird. Die solcherart erhaltene Schicht, welche als Lackschicht, aber auch als Lackierung bezeichnet wird, dient in der Regel zum Schutz der Oberfläche, beispielsweise zur Verbesserung der Kratzbeständigkeit, sowie zum Veredeln, beispielsweise durch Erzeugung eines bestimmten Oberflächeneindrucks, wie einer Hochglanzoberfläche.

### Textur

Die Textur beschreibt allgemein die Beschaffenheit einer Oberfläche, insbesondere hinsichtlich deren optischen und/oder ästhetischen Eigenschaften, wobei allerdings die Färbung außer Betracht bleibt. Von besonderem Interesse sind die Eigenschaften einer Oberfläche, welche deren Glanz bestimmen, also das Maß, auf die Oberfläche eintreffendes Licht zu reflektieren oder zu streuen, sowie diejenigen Eigenschaften, welche die Haptik, also Eigenschaften bei der Berührung der Oberfläche, beeinflussen. Hier sind insbesondere das Relief der Oberfläche (auch als Oberflächenrelief bezeichnet), also der Verlauf der Höhenlinien, und die Rauheit der Oberfläche von Bedeutung. Im Rahmen der vorliegenden Erfindung wird das Relief der Oberfläche einer flächigen Darstellung auch als deren Höhenprofil bezeichnet.

### Bild

Unter einem Bild wird im Rahmen der vorliegenden Anmeldung eine flächige Darstellung verstanden, beispielsweise in Form einer Fotographie oder einer Zeichnung, aber auch in Form von Text. Weiterhin kann das Bild auch als Gemälde ausgestaltet sein, insbesondere als ein mit Öl- und/oder Acrylfarbe gestaltetes Gemälde. Solche Gemälde zeichnen sich insbesondere durch einen starken Farbauftrag aus, der lokal schwankt, was auf die Pinselstriche beim Farbauftrag zurückzuführen ist, weisen also ein ausgeprägtes Oberflächenrelief auf.

### Struktur

Im Rahmen der vorliegenden Anmeldung wird unter einer Struktur die visuelle Beschaffenheit eines Bereichs einer flächigen Darstellung verstanden, welche sich insbesondere von der visuellen Beschaffenheit anderer, benachbarter Bereiche abgrenzt. Beispielsweise kann eine Struktur als Muster vorliegen, also als eine visuelle Gestaltung einer Oberfläche, welche eine gewisse Symmetrie und/oder Periodizität aufweist. Es ist aber auch möglich, dass die die Struktur bildende visuelle Darstellung in dem Sinne regellos ist, als sie lediglich eine bestimmte Nahordnung aufweist, wie beispielsweise die visuelle Darstellung einer Baumrinde, oder im Form einer nicht periodischen, aber geordneten Anordnung. Unter einer Struktur werden weiterhin im Sinne der vorliegenden Erfindung auch solche Bereiche verstanden, welche nach der Lebenserfahrung als von anderen Bereichen deutlich verschieden wahrgenommen werden. Beispielsweise können in der visuellen Darstellung eines Gesichts unterschiedliche Strukturen, beispielsweise hinsichtlich der Augen der Bereich der Iris als üblicherweise runder bzw. gerundeter Bereich sowie die Wimpern als dunkle, länglich-gebogene, dünne Bereiche unterschieden werden.

### Ortsaufgelöster Auftrag

Unter dem ortsaufgelösten Auftrag eines Stoffes, beispielsweise eines Beschichtungsmaterials, auf eine Oberfläche, wird allgemein verstanden, dass der Auftrag auf zuvor festgelegte Bereiche einer zu beschichtenden Unterlage, beispielsweise von Papier oder Karton, erfolgt. Beispielsweise beinhaltet der ortsaufgelöste Auftrag einer Druckfarbe das Erzeugen eines Bildes und/oder eines gedruckten Textes.

### Ortsabhängiger Auftrag

Sofern im Folgenden auf einen ortsabhängigen Auftrag abgestellt wird, handelt es sich dabei um das, in der Regel ortsaufgelöst erfolgende, Auftragen und/oder Nachbehandeln eines Beschichtungsmaterials, beispielsweise eines Lackes, in der Form, dass das Auftragen abhängig von der Position, an welcher der Auftrag des Beschichtungsmaterials erfolgt, ortsspezifisch unterschiedlich erfolgt. Beispielsweise beinhaltet das ortsabhängige Auftragen oder der ortsabhängige Auftrag, dass ein Beschichtungsmaterial in einem bestimmten Bereich einer zu beschichtenden Unterlage mit einer bestimmten Dicke aufgetragen wird, welche sich von der Dicke, mit welcher das Beschichtungsmaterial in einem anderen Bereich der Unterlage aufgetragen wird, unterscheiden kann.

Allgemein ist es aber auch möglich, dass ortsabhängig zwar dasselbe Beschichtungsmaterial mit derselben Dicke in unterschiedlichen Bereichen aufgebracht wird, aber eine ortsabhängig unterschiedliche Nachbehandlung dieser Bereiche erfolgt.

Selbstverständlich ist es auch möglich, dass beim ortsabhängigen Auftrag die Art des aufzutragenden Materials und/oder die Dicke der aufgetragenen Schicht und/oder die Nachbehandlung der aufgetragenen Schicht unterschiedlich vorgenommen werden.

Es ist somit gemäß einer Ausführungsform möglich, das Auftragen unterschiedlicher Schichtdicken mit unterschiedlichen Nachbehandlungen zu kombinieren. Die Mikrofaltung oder Selbstmattierung einer Beschichtung ist schichtdickenabhängig und kann wie ausgeführt je nach Schichtdicke zu matten und glänzenden Bereichen führen. Diese unterscheiden sich auch haptisch extrem voneinander. So sind die glänzenden Stellen eher "klebrig", so dass beim Darüberstreichen mit dem Finger, der Finger eher gebremst wird, wohingegen bei den mikrogefalteten Bereichen der Finger sehr samtig-leicht darüber gleitet und sich der Film "weich" anfühlt.

Sofern im Rahmen der vorliegenden Erfindung von einem lateral ortsabhängigen und/oder ortsaufgelösten Auftrag gesprochen wird, ist darunter zu verstehen, dass der Auftrag der Beschichtung sich insbesondere hinsichtlich der lateralen, d.h. der sich über die Breite der aufgetragenen Beschichtung und/oder Farbe ortsabhängig und/oder ortsaufgelöst unterscheidet.

### Druckfarben

Als Druckfarben oder Tinten werden allgemein solche fluiden Beschichtungsmaterialien bezeichnet, deren Funktion im Wesentlichen die visuelle Ausgestaltung von zu beschichtenden oder zu belegenden Unterlagen ist, beispielsweise bei der Erzeugung von Bildern oder von Text. Druckfarben sind damit insbesondere als färbende Substanzen ausgebildet, beispielsweise durch den Zusatz von Pigmenten und/oder Farbstoffen in das fluide Beschichtungsmaterial. Die Begriffe "Druckfarbe" und "Tinte" werden dabei üblicherweise synonym verwendet.

### Dreidimensionale Ausgestaltung von Oberflächen

Unter einer dreidimensionalen Ausgestaltung einer Oberfläche wird es verstanden, wenn ein Beschichtungsmaterial zum Erzeugen einer Beschichtung nicht nur zweidimensional abgegrenzt in der Form erfolgt, dass beispielsweise ein Bild und/oder ein Text erhalten wird, sondern der Auftrag des Beschichtungsmaterials, beispielsweise eines Lacks, in der Form erfolgt, dass auch die Höhe des Auftrags des Beschichtungsmaterials, also beispielsweise einer Lackschicht, und/oder der Höhenverlauf in dieser Beschichtung, also beispielsweise deren Relief, ausgestaltet wird, beispielsweise durch eine gezielte ortsaufgelöste, vorzugsweise lateral ortsaufgelöste, Einstellung einer bestimmten Dicke des Materialauftrags und/oder einer ausgewählten ebenfalls ortsaufgelösten, vorzugsweise lateral ortsaufgelösten, Form der Nachbehandlung des Beschichtungsmaterials und/oder einer ausgewählten vorzugsweise lateral unterschiedlichen Zusammensetzung des Beschichtungsmaterials.

### Beschichtung

Unter einer Beschichtung wird im Rahmen der vorliegenden Erfindung der Vorgang des Beschichtens verstanden, also das Erzeugen einer Oberflächenschicht auf einer Unterlage. Durch eine Beschichtung wird also eine Lage eines Materials auf einer Oberfläche abgeschieden, wobei in der Regel eine Verbindung zwischen dem Beschichtungsmaterial und der Unterlage entsteht, so dass ein Verbund zwischen der entstandenen Schicht und der Unterlage vorliegt. Dies ist beispielsweise durch das Bilden einer Grenzflächenschicht zwischen Schicht und Unterlage möglich, beispielsweise, indem ein Primer oder Haftvermittler vor dem Auftrag des Beschichtungsmaterials auf die zu belegenden oder beschichtenden Teile der Unterlage aufgebracht wird. Auch ist es möglich, dass ein fluides Beschichtungsmaterial zumindest in Teilen in oberflächennahe Bereiche der zu belegenden Unterlage migriert und auf diese Weise ein Haftverbund erzeugt wird. Die Lage von Beschichtungsmaterial auf einer Oberfläche hat eine gewisse Höhe, welche beispielsweise bei Lackierungen im Bereich von einigen Mikrometern liegen kann.

Im Gegensatz zu einer solchen Beschichtung stehen Verfahren, bei welchen das aufgetragene Material durch die Unterlage aufgesogen wird, so dass keine oder nur eine äußerst geringe lokale Erhöhung erhalten wird. Dies ist beispielsweise der Fall, wenn eine Tinte auf eine saugende Unterlage aufgetragen wird. In diesem Fall wird die Tinte durch das Material, beispielsweise Papier, aufgesogen, so dass in diesem Fall weniger ein Auftrag auf die Oberfläche einer Unterlage als vielmehr ein Eintrag von Material in die Oberfläche der Unterlage erfolgt. Insbesondere umfasst der Begriff der Beschichtung auch den Begriff der Lackierung, wobei eine Lackierung eine Schicht ist, welche durch den Auftrag eines Lacks als fluidem Beschichtungsmaterial auf eine Oberfläche einer Unterlage erzeugt wird.

### Farbe

Unter der Farbe einer flächigen Darstellung wird deren Farbeindruck oder Farbort verstanden. Der Farbeindruck oder Farbort kann dabei auf unterschiedliche Weise, insbesondere in unterschiedlichen sogenannten Farbräumen oder Farbsystemen angegeben werden. In der Regel arbeiten beispielsweise Farbsensoren in einem Dreifarbraum.

### Mikrofaltung

Unter dem Begriff der Mikrofaltung wird im Rahmen der vorliegenden Erfindung folgendes Phänomen verstanden: Die Oberflächenschicht eines aufgetragenen Fluiden Beschichtungsmaterials wird in einem ersten Schritt zu einer hautartigen Schicht, dies bedeutet zu einer Schicht mit einem oberflächennahen härteren oder zäheren Anteil gehärtet. Bedingt durch den Schrumpf bei der Härtung bei gewissen Materialien wie z.B. ungesättigten Acrylaten, wie sie in beispielsweise radikalisch UV-härtbaren Formulierungen enthalten sind, zieht sich diese Oberflächenschicht bei der Härtung zusammen. Dadurch kommt es zu einer Strukturierung, welche bedingt, dass zumindest in einem Teilbereich der Beschichtungsoberfläche eine lokale Änderung der Beschichtungsdicke vorliegt, so dass die Dickenschwankungen mindestens im einstelligen Mikrometerbereich liegen. Insbesondere kann die Oberflächenschicht gefaltet vorliegen. In einem zweiten Schritt wird das aufgetragene Fluide Beschichtungsmaterial über das gesamte Volumen ausgehärtet.

### Beispiele

Das Verfahren gemäß Ausführungsformen der vorliegenden Erfindung ist beispielsweise mittels fluiden Beschichtungsmaterialien besonders gut durchführbar, welche durch energiereiche Partikelstrahlung, insbesondere durch UV-Strahlung, härtbar, insbesondere durch radikalische Polymerisierung, sowie einem Mikrofaltungsprozess zugänglich ist. Dabei erfolgt die Mikrofaltung durch Bestrahlung der Oberflächenschicht einer aufgebrachten Beschichtung, erfindungsgemäß durch Bestrahlung mit UV-C-Strahlung mit einer Wellenlänge von mehr als 240 nm. Allgemein kann ein fluides Beschichtungsmaterial (oder auch Beschichtungsfluid), welches zur Durchführung des Verfahrens gemäß Ausführungsformen der Erfindung geeignet ist, eine Zusammensetzung aufweisen, bei welcher 100 Teile eines flüssigen Bindemittels auf 13 Teile eines Gemischs von Photoinitiatoren und/oder Vernetzungsmitteln und/oder Aktivatoren für die Aushärtung kommen.

Als Photoinitiatoren werden hierbei im Rahmen der vorliegenden Erfindung Stoffe verstanden, welche durch Absorption von Licht, insbesondere von UV-Licht, angeregt werden und in der Folge eine reaktive Spezies, insbesondere Radikale oder Kationen, bilden. Die Bildung der reaktiven Spezies erfolgt entweder durch den Zerfall des Moleküls und/oder durch Interaktion mit einem Synergisten.

Erfindungsgemäß werden Photoinitiatoren eingesetzt, welche Radikale bilden.

Als Vernetzungsmittel und/oder Aktivatoren werden im Rahmen der vorliegenden Erfindung Stoffe verstanden, welche Polymerisationsreaktionen besonders effizient gestalten, beispielsweise, indem sie geeignet sind, besonders effektive Startradikale zu bilden. Ein anderes Beispiel für eine Effizienzerhöhung ist die Transferierung eines durch Sauerstoffinhibierung inaktiven Radikals in ein erneutes Startradikal. Im Rahmen dieser Offenbarung ist der Aktivator jeweils auch ein Synergist und kann auch als solcher bezeichnet werden.

Gemäß einer Ausführungsform der Erfindung wird als Vernetzungsmittel bzw. Aktivator mindestens ein tertiäres Amin eingesetzt. Bevorzugt erfolgt dies gemäß einer weiteren Ausführungsform der Erfindung dann, wenn als Photoinitiator ein sogenannter Typ II-Photoinitiator verwendet wird. Bei einem Typ Il-Photoinitiator werden Radikale gebildet, indem der angeregte Photoinitiator, beispielsweise Benzophenon im Triplettzustand, einem benachbarten Molekül ein Wasserstoffatom entzieht. Demgegenüber bilden sich bei Typ-I-Photoinitiatoren die Radikale direkt durch den Zerfall des Initiator-Moleküls. Ein Beispiel für einen Typ-I-Photoinitiator ist unter den Handelsnamen Irgacure 1173 bzw. Darocur 1173 erhältlich und umfasst 1-phenyl-2-hydroxy-2-methyl-1-Propanon.

Bevorzugt wird ein Bindemittel auf Acrylatbasis eingesetzt.

Weiterhin bevorzugt ist das Gemisch aus Photoinitiatoren und/oder Vernetzungsmitteln und/oder Aktivatoren so zusammengesetzt, dass ein Teil eines Photoinitiators vom Typ I, 6 Teile eines Photoinitiators vom Typ II und 6 Teile eines Aktivators zugesetzt werden.

Der Synergist (oder auch Aktivator) bewirkt jeweils zusammen mit Typ-II-Photoinitiatoren eine Überwindung der Sauerstoffinhibierung und wird insbesondere bei der Vernetzung unter atmosphärischen Bedingungen eingesetzt, um eine Oberflächenreaktivität zu ermöglichen und/oder zu verstärken.

Gemäß einer Ausführungsform der Erfindung weist das flüssigen Beschichtungsmaterial folgende Zusammensetzung auf:
40 Teile HDDA (Hexandioldiacrylat)
10 Teile TMPTA (Trimethylolpropantriacrylat)
50 Teile DPGDA (Dipropylenglycoldiacrylat)
1 Teil Irgacure 1173 (oder Darocur 1173)
6 Teile Benzophenon
6 Teile N-Methyldiethanolamin

Dass sich die Reaktivität an der Oberfläche des aufgetragenen Beschichtungsfilms von der Reaktivität im Volumen des aufgetragenen Beschichtungsfilms gezielt unterscheidet, wird somit dadurch erreicht, dass 1 Teil eines Photoinitiators vom Typ I, hier 1-phenyl-2-hydroxy-2-methyl-1-Propanon, 6 Teile eines Photoinitiators vom Typ II, hier Benzophenon, sowie 6 Teile eines Aktivators, hier N-Methyldiethanolamin, auf 100 Teile eines flüssigen Bindemittelgemischs (hier umfassend HDDA, TMPTA sowie DPGDA) verwendet werden. Durch Veränderung der Anteile des Photoinitiators vom Typ I relativ zu den Anteilen des Photoinitiators vom Typ II können weitere gezielte Unterscheidungen der Reaktivität an der Oberfläche des aufgetragenen Beschichtungsfilms von der Reaktivität im Volumen des aufgetragenen Beschichtungsfilms erreicht werden.

Der Begriff Teile bezeichnet im Rahmen dieser Offenbarung jeweils Gewichtsanteile.

Gemäß einer weiteren Ausführungsform der Erfindung weist das flüssige Beschichtungsmaterial folgende Zusammensetzung auf:
80 Teile HDDA (Hexandioldiacrylat)
20 Teile TMPTA (Trimethylolpropantriacrylat)
1 Teil Irgacure 1173 (oder Darocur 1173)
6 Teile Benzophenon
6 Teile N-Methyldiethanolamin

Dass sich die Reaktivität an der Oberfläche des aufgetragenen Beschichtungsfilms von der Reaktivität im Volumen des aufgetragenen Beschichtungsfilms gezielt unterscheidet, wird somit dadurch erreicht, dass 1 Teil eines Photoinitiators vom Typ I, hier 1-phenyl-2-hydroxy-2-methyl-1-Propanon, 6 Teile eines Photoinitiators vom Typ II, hier Benzophenon, sowie 6 Teile eines Aktivators, hier N-Methyldiethanolamin, auf 100 Teile eines flüssigen Bindemittelgemischs (hier umfassend HDDA und TMPTA) verwendet werden und im Unterschied zum vorigen Beispiel eine höherreaktive Bindemittelmischung eingesetzt wird. Durch Veränderung der Anteile des Photoinitiators vom Typ I relativ zu den Anteilen des Photoinitiators vom Typ II können weitere gezielte Unterscheidungen der Reaktivität an der Oberfläche des aufgetragenen Beschichtungsfilms von der Reaktivität im Volumen des aufgetragenen Beschichtungsfilms erreicht werden.

Ein weiteres Beispiel eines Erzeugnisses, das mittels der Strahlung eines Quecksilber-Mitteldruckstrahlers mit einer Mikrofaltung versehen werden kann, wird mit folgender Formulierung beschichtet:
100 Teile DPGDA (Dipropylenglycoldiacrylat)
1 Teil Irgacure 1173 (oder Darocur 1173)
6 Teile Benzophenon
6 Teile N-Methyldiethanolamin

Dass sich die Reaktivität an der Oberfläche des aufgetragenen Beschichtungsfilms von der Reaktivität im Volumen des aufgetragenen Beschichtungsfilms gezielt unterscheidet, wird somit dadurch erreicht, dass 1 Teil eines Photoinitiators vom Typ I, hier 1-phenyl-2-hydroxy-2-methyl-1-Propanon, 6 Teile eines Photoinitiators vom Typ II, hier Benzophenon, sowie 6 Teile eines Aktivators, hier N-Methyldiethanolamin, auf 100 Teile eines flüssigen Bindemittels (hier umfassend DPGDA) verwendet werden. Das eingesetzte DPGDA als difunktionelles Bindemittel bildet einer relativ weichen Film. Der Volumenschrumpf ist gegenüber TMPTA-haltigen Formulierungen weniger ausgeprägt. Durch Veränderung der Anteile des Photoinitiators vom Typ I relativ zu den Anteilen des Photoinitiators vom Typ II können weitere gezielte Unterscheidungen der Reaktivität an der Oberfläche des aufgetragenen Beschichtungsfilms von der Reaktivität im Volumen des aufgetragenen Beschichtungsfilms erreicht werden.

In einer alternativen, nicht erfindungsgemäßen Ausführungsform gelingt die Mikrofaltung in nur einem Aushärtungsschritt. Hierfür müssen der Beschichtungsformulierung beispielsweise elastische aliphatische Urethanacrylate zugegeben werden. Eine sehr gute Reaktivität bei gleichzeitig sehr ausgeprägtem Effekt wird mit folgender Formulierung erzielt:
80 Teile DPGDA (Dipropylenglycoldiacrylat)
20 Teile Ebecryl 4491 von Allnex
1 Teil Irgacure 1173 (oder Darocur 1173)
6 Teile Benzophenon
6 Teile N-Methyldiethanolamin

Dass die Reaktivität an der Oberfläche des aufgetragenen Beschichtungsfilms sich von der Reaktivität im Volumen des aufgetragenen Beschichtungsfilms gezielt unterscheidet, wird somit dadurch erreicht, dass 1 Teil eines Photoinitiators vom Typ I, hier 1-phenyl-2-hydroxy-2-methyl-1-Propanon, 6 Teile eines Photoinitiators vom Typ II, hier Benzophenon, sowie 6 Teile eines Aktivators, hier N-Methyldiethanolamin, auf 100 Teile eines flüssigen Bindemittelgemischs (hier umfassend DPGDA und Ebecryl 4491) verwendet werden. Durch Veränderung der Anteile des Photoinitiators vom Typ I relativ zu den Anteilen des Photoinitiators vom Typ II können weitere gezielte Unterscheidungen der Reaktivität an der Oberfläche des aufgetragenen Beschichtungsfilms von der Reaktivität im Volumen des aufgetragenen Beschichtungsfilms erreicht werden.

Auch mit AC Resin 250 der BASF können gleichartige Effekte erzielt werden.

Bei allen erwähnten Formulierungen handelt es sich um Grundformulierungen, die für die Erreichung einer Verarbeitbarkeit noch mit entsprechenden Verlaufs- und Benetzungsadditiven ergänzt werden können. Diese Additivierung hat auf die Erzielung der gewünschten Effekte aber keinen Einfluss. Außerdem ist in diesen Beispielen für die Erzielung der Mikrofaltung eine Schichtdicke von mindestens 12 µm notwendig. In einem Bereich zwischen 10 und 12 µm wird die Mikrofaltung nur unregelmäßig ausgebildet. Unterhalb von 10 µm bleibt die Oberfläche jeweils glänzend. Durch gezielte Beeinflussung der Formulierung und der Härtungsbedingungen (Wellenlänge, Dosis, Intensität) kann der Schichtdickenbereich, in dem eine Mikrofaltung erzielt wird, in weiten Bereichen eingestellt werden. Durch entsprechend hohe UV-Dosen einer geeigneten Wellenlänge (UV-C) kann die Mikrofaltung sogar gänzlich verhindert werden.

Die vorgenannten Formulierungen zeichnen sich alle durch eine sehr niedrige Verarbeitungsviskosität (von 70 - 120 s im DIN 2 Auslaufbecher) aus, die ihren Einsatz in Inkjet-Druckköpfen erlaubt. Hierbei kann vorteilhafterweise ein Verfahren eingesetzt werden, das die gleichzeitige Erzeugung von Bereichen stark unterschiedlicher Schichtdicken erlaubt.

Der Effekt der Mikrofaltung ist jedoch in keiner Weise von der Viskosität abhängig. Es ist auch möglich, sehr viel höherviskose Formulierungen zu erzeugen, die mit anderen Verfahren aufgebracht werden können. Wichtig ist es, eine relativ höhere Reaktivität an der Oberfläche als im Volumen zu erhalten. Die eingesetzten Photoinitiatoren müssen hierbei ihr Absorptionsmaximum im UV-C-Bereich aufweisen.

Der Effekt der Mikrofaltung kann verhindert werden, wenn man der Formulierung höhere Konzentrationen von Photoinitiatoren für die Volumenhärtung zusetzt (z.B. > 2% Irgacure 1173 bei sonst gleichen Konzentrationen von Photoinitiatoren und Koinitiatoren in der Formulierung können den Effekt verhindern). Das gleiche gilt, wenn für die Volumenhärtung Photoinitiatoren mit höherer Absorptionswellenlänge in geeigneten Konzentrationen eingesetzt werden. So kann auch durch Zugabe von 1% TPO (Triphenylphosphinoxid) in die obengenannten Formulierungen die Mikrofaltung verhindert werden. Die Prozentangaben beziehen sich jeweils auf Gewichtsprozent.

### Beschreibung der Zeichnungen

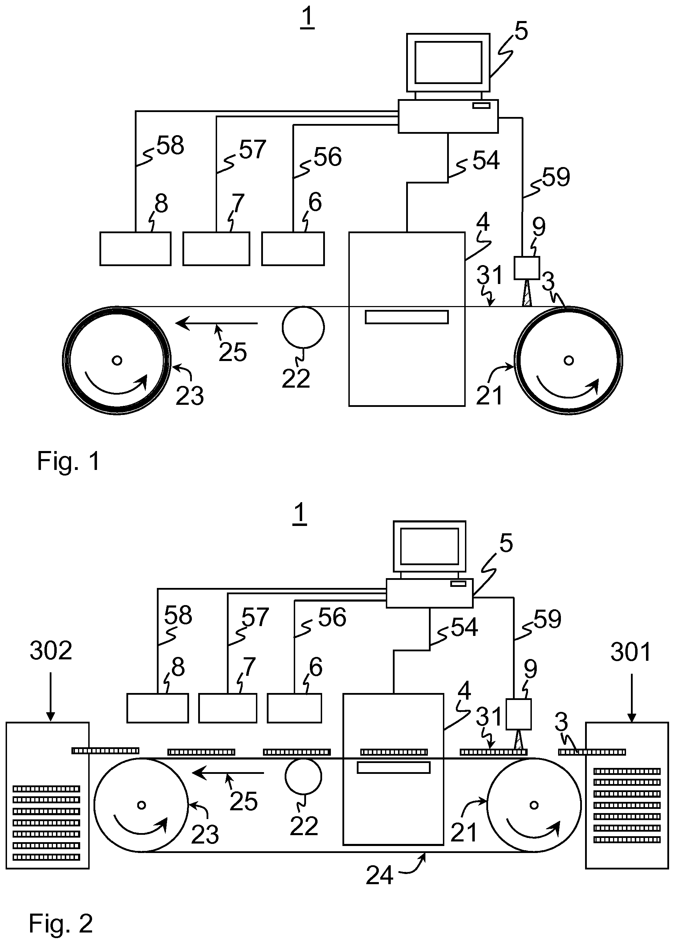

Figur 1 zeigt in schematischer Darstellung eine Ausführungsform einer Vorrichtung 1 zum Erzeugen einer texturierten Beschichtung auf einer Unterlage 3, insbesondere zum ortsaufgelösten, vorzugsweise zum lateral ortsaufgelösten, Erzeugen einer texturierten Beschichtung, vorzugsweise zum ortsaufgelösten Erzeugen einer ortsabhängig, vorzugsweise lateral ortsabhängig, texturierten Beschichtung, wobei die Beschichtung durch das Auftragen eines fluiden Beschichtungsmaterials erhalten wird, bevorzugt eines, welches durch energiereiche Partikelstrahlung, insbesondere durch UV-Strahlung, härtbar ist, wobei die Vorrichtung umfasst:
Es ist in Figur 1 ein Mittel zum Transport der Unterlage 3 zwischen den einzelnen Arbeitsstationen zu erkennen. Dieses Mittel zum Transport wird bei der Vorrichtung 1 durch die Teile 21, 22 und 23 beispielhaft gebildet und umfasst eine erste Walze oder Rolle 21, auf welche eine Unterlage bzw. ein Bedruckstoff 3, beispielsweise ausgebildet aus Papier, Karton, laminiertem Papier oder laminiertem Karton, Kunststofffolien sowie Wellpappesubstraten, oder Polyolefinfolie oder PET- oder Acetatfolie, aufgerollt ist.

Die Unterlage 3 wird in Richtung des Pfeiles 25, der Transportrichtung, durch die Vorrichtung 1 bewegt, wobei die Oberfläche 31 des Bedruckstoffs bzw. des Substrats bzw. der Unterlage 3, welche bedruckt werden soll, in Figur 1 nach oben gerichtet ist. Die Walze 22 ist ein weiterer Teil des Transportmittels.

Weiterhin umfasst die Vorrichtung 1 eine Vorrichtung 4 zum Aufbringen des fluiden Beschichtungsmaterials auf die Unterlage 3. Eine Vorrichtung zum Aufbringen von fluidem Beschichtungsmaterial ist beispielsweise in der WO 2009/01 2996 als Beschichtungseinheit beschrieben, wobei gemäß vorliegender Erfindung die darin beschriebene Einrichtung zur Glättung des auf die Substratoberfläche mittels der Beschichtungseinheit aufgetragenen Films zwar vorteilhaft verwendbar ist, jedoch eine optionale Einheit darstellt, welche nicht zwingend zur Durchführung der Erfindung verwendet werden muss.

Die Vorrichtung 4 kann dabei so ausgestaltet sein, dass das fluide Beschichtungsmaterial über den gesamten Bereich der Oberfläche 31 der Unterlage 3 oder nur über einen Teilbereich derselben aufgetragen wird. Ein Auftrag über den gesamten Bereich der Oberfläche 31 der Unterlage 3 ist dabei vorteilhaft, wenn ein fluides Beschichtungsmaterial aufgetragen wird, welches im ausgehärteten Zustand auch eine Schutzfunktion wahrnimmt, beispielsweise Kratzschutzeigenschaften aufweist. Demgegenüber ist ein lediglich partieller Auftrag, also ein Auftrag des fluiden Beschichtungsmaterials lediglich über einen Teilbereich der Oberfläche 31 der Unterlage 3, von Vorteil, um beispielsweise bestimmte Bereich der Unterlage gezielt hervorzuheben oder zu markieren. Es können auf diese Weise auch Abbildungen, beispielsweise in Form von Bildern oder Texten, erzeugt werden.

Die Vorrichtung 1 umfasst ferner eine Vorrichtung 7 zum Aushärten der Beschichtung. Das Aushärten der Beschichtung vollzieht sich ortsabhängig, vorzugsweise lateral ortsabhängig, insbesondere in zwei Schritten. Die mittels der Vorrichtung 7 zum Aushärten in die Beschichtung vorzugsweise ortsabhängig, insbesondere lateral ortsabhängig, eingebrachte Leistung ist vorzugsweise so einstellbar, dass in einem ersten Schritt nur die Oberflächenschicht der Beschichtung behandelt wird. Dabei weist die Oberflächenschicht vorzugsweise eine Dicke zwischen 10 nm und 1 µm, auf. In einem zweiten Schritt ist die Beschichtung über die gesamte Dicke aushärtbar. Bevorzugt umfasst die Vorrichtung 7 ein informatisches Mittel zur Steuerung des Aushärtens der Beschichtung. Insbesondere ist das informatische Mittel dergestalt ausgebildet, dass es die Leistung, die Dosis und/oder den Ort der Aushärtung bestimmt.

Allgemein, ohne Beschränkung auf das zuvor beschriebene Beispiel, ist es möglich, dass sich das Härten in der Form vollzieht, dass über die gesamte Fläche der flächigen Darstellung die gleiche Leistung eingebracht wird, beispielsweise, indem gleichmäßig und ohne örtliche Variation von Leistung und/oder Wellenlänge UV-Strahlung, beispielsweise mittels eines UV-Mitteldruckstrahlers, ausgehärtet wird. In diesem Fall ist es weiterhin möglich, dass sich lediglich in Abhängigkeit von der unterschiedlichen Dicke der Beschichtung ortsabhängig, vorzugsweise lateral ortsabhängig, unterschiedliche Texturen der Beschichtung ausbilden, beispielsweise indem in Bereichen mit höherer Schichtdicke Mikrofaltung entsteht, in Bereichen mit niedrigerer Schichtdicke jedoch eine glatte, nicht mikrogefaltete Oberfläche erzeugt wird.

Weiterhin ist in Figur 1 eine Vorrichtung 6 zum Trocknen der Beschichtung dargestellt. Mittels dieser Vorrichtung ist es möglich, in einem ersten Schritt leicht flüchtige Bestandteile des fluiden Beschichtungsmaterials vor dem Aushärten zu entfernen. Eine solche Vorrichtung 6 ist allerdings lediglich optional von der Vorrichtung 1 mit umfasst. Weiterhin kann die Vorrichtung 1 eine Vorrichtung 8 zum Kühlen der beschichteten Unterlage nach der Aushärtung umfassen.

Figur 1 zeigt darüber hinaus auch eine Vorrichtung 9 zum Scannen einer flächigen Darstellung.

Es umfasst die Vorrichtung 9 zum Scannen einer flächigen Darstellung einen Sensor, mittels welchem ortsaufgelöst, insbesondere lateral ortsaufgelöst, der Farbort von Bildpunkten der flächigen Darstellung erfasst wird. Es umfasst die Vorrichtung 9 einen Farbsensor, beispielsweise einen Sensor umfassend eine UV-Laserdiode. Es umfasst die Vorrichtung 9 weiterhin auch ein Mittel zum Erfassen eines Höhenprofils einer flächigen Darstellung. Dies heißt, dass sowohl Farb- als auch Textur- und Reliefinformationen der flächigen Darstellung, beispielsweise in Form eines Gemäldes, mittels der Vorrichtung 9, also mittels eines Scanners beziehungsweise 3D-Scanners, erfasst und digitalisiert werden können. Sodann kann basierend auf dem so erhaltenen digitalisierten Datensatz, welcher sowohl die Farbinformationen als auch beispielsweise in Form eines Graustufenbildes die Reliefinformationen der flächigen Darstellung umfasst, zunächst durch Auswerten der Farbinformation und einem darauf basierenden Farbauftrag und sodann in einem weiteren Schritt durch Auswerten der Textur- und Reliefinformation eine Beschichtung so aufgetragen werden, dass für den Betrachter optisch und haptisch beispielsweise wieder der Eindruck des Originalgemäldes entsteht. Auf diese Weise kann mit der Vorrichtung 1 somit nicht nur eine Textur, sondern auch ein Oberflächenrelief einer Beschichtung auf einer flächigen Darstellung erzeugt werden.

Die Vorrichtung 1 umfasst weiterhin ein informatisches Mittel zum Speichern und/oder Auswerten eines digitalisierten Datensatzes einer flächigen Darstellung, beispielsweise in Form eines Computers. Es ist allerdings auch möglich, dass dieses informatische Mittel in die Vorrichtung 9 integriert ist.

Die Vorrichtung 1 kann weiterhin gemäß einer bevorzugten Ausführungsform der Erfindung eine Anlagensteuerung 5 umfassen, beispielsweise in Form eines informatischen Mittels wie beispielsweise eines Computers, zur Steuerung der Arbeitsschritte der Anlage, welches die relevanten Parameter bei allen Verfahrensschritten vorzugsweise sensorisch erfasst und vorzugsweise mit jeweils zugeordneten Aktoren steuert und somit deren Zusammenwirken sicherstellt. Es ist weiterhin auch möglich, dass das informatische Mittel zum Speichern und/oder Auswerten eines digitalisierten Datensatzes, von der Anlagensteuerung 5 mit umfasst ist, also beispielsweise, wie hier beispielshaft dargestellt, die Vorrichtung 9 mittels einer Schnittstelle 59 mit der Vorrichtung 5 als informatischem Mittel zum Speichern und/oder Auswerten eines digitalisierten Datensatzes einer flächigen Darstellung verbunden ist.

Die Anlagensteuerung 5 umfasst bevorzugt auch ein Mittel, um Parameter in einem informatischen Format, welches beispielsweise in der Druckindustrie allgemein verwendet wird, beispielsweise JDF (Job Definition Format) auszulesen und in Verfahrensschritte umzusetzen. Beispielhaft kann ein solches Mittel eine auf einem Speicher abgelegte Parametrisierungsdatei umfassen.

Auch ist es möglich, dass die Vorrichtung 1 allgemein, ohne Beschränkung auf das hier dargestellte Ausführungsbeispiel, mehrere Anlagensteuerungen umfasst, welche gezielt jeweils einzelne Vorrichtungen ansteuern.

Gemäß einer weiteren Ausführungsform der Erfindung umfasst die Vorrichtung 1 zumindest jeweils einen Sensor sowie einen Encoder und Aktoren, um die jeweiligen Verfahrensschritte sensorisch zu erfassen und gesteuert durch den Computer mittels entsprechender Aktoren jeweils umzusetzen.

Die Anlagensteuerung 5 ist gemäß einer Ausführungsform bevorzugt über geeignete Schnittstellen, beispielhaft den Schnittstellen 54, 56, 57, 58, 59 mit Vorrichtungen, welche von der Vorrichtung 1 umfasst sind, beispielhaft den Vorrichtungen 4, 6, 7, 8. 9 verbunden.

Figur 2 zeigt eine weitere schematische Darstellung einer Vorrichtung 1 gemäß einer weiteren bevorzugten Ausführform. Die Vorrichtung 1 umfasst hierbei eine Vorrichtung zur Aufnahme der Unterlage 301, in welcher verschiedene Unterlagen 3, welche der besseren Übersicht halber nicht alle bezeichnet sind, enthalten sind. Aus der Vorrichtung 301 zur Aufnahme der Unterlage 3 werden einzelne Unterlagen 3, welche beispielsweise Papier, Karton, laminiertes Papier oder laminierten Karton, Kunststofffolien sowie Wellpappesubstrate, oder Polyolefinfolie oder PEToder Acetatfolie umfassen können, mittels des Mittels zum Transport der Unterlage 3 zwischen den einzelnen Arbeitsstationen durch die Vorrichtung 1 bewegt.

Das Mittel zum Transport der Unterlage 3 umfasst eine erste Walze 21, eine zweite Walze 23 sowie zusätzlich eine weitere Walze 22, wobei noch verschiedene weitere Walzen 22 von dem Mittel zum Transport umfasst sein können. Weiterhin umfasst das Mittel zum Transport ein Transportband 24, welches die beiden Walzen 21 und 23 miteinander verbindet, durch die Rotation zumindest einer der Walzen 21, 23 eine Bewegung der Unterlagen 3 durch die Vorrichtung 1 in Richtung des Pfeils 25 erfolgt.

Wiederum umfasst die Vorrichtung 1 die Vorrichtung 4 zum Aufbringen des fluiden Beschichtungsmaterials auf die Unterlage 3 sowie eine Vorrichtung zum Aushärten der Beschichtung 7.

Weiterhin sind die Vorrichtungen 6 und 8 dargestellt, welche der Trocknung des fluiden Beschichtungsmaterials bzw. einer Kühlung der bedruckten Unterlage nach erfolgter Aushärtung dienen können und vorliegend lediglich optional sind. Die Vorrichtungen 4, 6, 7, 8, 9 können jeweils über eine Schnittstelle 54, 56, 57, 58, 59 mit einer Anlagensteuerung 5 verbunden sein. Auch eine solche Anlagensteuerung 5 mit den entsprechenden Schnittstellen ist lediglich optional von der Vorrichtung 1 umfasst.

Figur 2 zeigt darüber hinaus auch eine Vorrichtung 9 zum Scannen einer flächigen Darstellung.

Es umfasst die Vorrichtung 9 zum Scannen einer flächigen Darstellung einen Sensor, mittels welchem ortsaufgelöst der Farbort von Bildpunkten der flächigen Darstellung erfasst wird. Es umfasst die Vorrichtung 9 einen Farbsensor, beispielsweise einen Sensor umfassend eine UV-Laserdiode. Es umfasst die Vorrichtung 9 ein Mittel zum Erfassen eines Höhenprofils einer flächigen Darstellung. Weiterhin umfasst die Vorrichtung ein informatisches Mittel zum Speichern und Auswerten eines digitalisierten Datensatzes einer flächigen Darstellung. Beispielsweise kann dieses informatische Mittel in Form eines Computers vorliegen. Es ist möglich, dass dieser Computer separat vorliegt. Es ist aber auch möglich, dass das informatische Mittel Teil einer Anlagensteuerung 5 ist oder von dieser umfasst wird.

Weiterhin ist es allgemein, ohne Beschränkung auf das hier dargestellte Ausführungsbeispiel, auch möglich, dass mehrere Anlagensteuerungen 5 von einer Vorrichtung 1 umfasst sind, welche jeweils einzelne Vorrichtungen 4, 6, 7, 8 und 9 steuern.

Darüber hinaus umfasst die Vorrichtung 1 dieser Ausführungsform eine Vorrichtung 302 zur Entnahme der Unterlage 3.

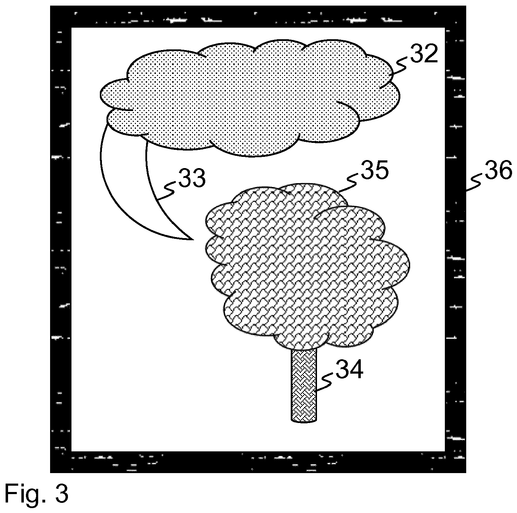

Figur 3 zeigt schematisch eine flächige Darstellung. Die flächige Darstellung ist auf eine Unterlage 3 (nicht dargestellt) aufgebracht und umfasst mehrere Bereiche 32, 33, 34, 35, 36 welche unterschiedliche Strukturen aufweisen. Beispielsweise ist der Bereich 32 als Wolke ausgebildet. Die Beschaffenheit der Struktur ist nach allgemeiner Anschauung als eher matt zu klassifizieren, so dass in diesem Bereich 32 eine eher matte Textur einer Beschichtung zu erzeugen ist. Der Bereich 33 ist schematisch in Form eines Mondes ausgebildet und erhält infolgedessen eine glatte Oberflächentextur, um eine hochglänzende Oberfläche zu erzeugen, welche den visuellen Eindruck des Mondes als leuchtende Himmelserscheinung unterstützt. Weiterhin ist der Bereich 34 als Baumstamm ausgebildet, der Bereich 35 als Baumkrone. Beide Bereiche weisen charakteristische Strukturen auf, beispielsweise die Baumkrone 35 in Form der Belaubung, der Baumstamm 34 eine raue Oberfläche in Form von Rinde. Die entsprechenden Texturen können verfahrensgemäß erzeugt werden, so dass der visuelle Eindruck der flächigen Darstellung durch die Belegung mittels einer ortsaufgelöst, hier lateral ortsaufgelöst, aufgetragenen und ortsabhängig, hier lateral ortsabhängig, texturierten Beschichtung, insbesondere einer Lackierung, noch deutlicher hervorgehoben werden kann. Der Bereich 36 der flächigen Darstellung ist als Darstellung eines Rahmens aus Holz ausgebildet, so dass auf diesem Bereich 36 die Textur einer rauen, gemaserten Holzoberfläche erzeugt wird.

Selbstverständlich sind auf diese Weise nicht nur ästhetische Wirkungen möglich. Vielmehr können auf diese Weise auch haptische Eindrücke gezielt hervorgerufen werden.

## Patentansprüche

1. Verfahren zum Erzeugen einer texturierten Beschichtung, umfassend die folgenden Schritte:
a. Bereitstellen einer flächigen Darstellung, wobei die flächige Darstellung in verkörperter Form vorliegt, und Scannen der flächigen Darstellung, um einen digitalisierten Datensatz zu erhalten in Form einer digitalen Datei, umfassend ortsautgelöste und/oder ortsabhängige Farbinformationen der flächigen Darstellung sowie Informationen zur Oberflächentextur und/oder zum Oberflächenrelief,
b. Auswerten des Datensatzes der flächigen Darstellung mittels eines informatischen Mittels
c. so dass darauf basierend lokale Strukturen einer flächigen visuellen Darstellung der flächigen Darstellung bestimmt werden,
d. Bestimmen von Art und Ort mindestens einer zu erzeugenden Textur auf mindestens einem Bereich (32,33,34,35,36) der flächigen Darstellung, sodass die zusätzlich zur Farbinformation der flächigen Darstellung erfasste Oberflächentextur und/oder das zusätzlich erfasste Oberflächenrelie der flächigen Darstellung in eine mit der Beschichtungseinheit übertragbaren Texturinformation übersetzt werden,
e. Bereitstellen einer Unterlage (3),
f. Auftragen von Farbe auf die Unterlage basierend auf der Auswertung der Farbinformation der flächigen Darstellung,
g. Bereitstellen eines Lacks, wobei der Lack farblos ist,
h. Aufbringen des Lacks auf die Unterlage, auf die in Schritt f. die Farbe aufgetragen wurde, wobei der Lack ortsabhängig, so aufgebracht wird, dass die Dicke der Beschichtung und/oder die Härtung der Beschichtung spezifisch auf die Art der zu erzeugenden Textur der Beschichtung angepasst ist, sowie
i. einen Schritt des Härtens des aufgetragenen Lacks, wobei das Härten ortsabhängig erfolgt, wobei die Dauer des Härtens und/oder die Art des Härtens in unterschiedlichen Bereichen einer aufgebrachten Beschichtung und/oder in unterschiedlichen Teilbereichen der Unterlage, auf deren Oberfläche die flächige Darstellung aufgebracht oder in deren Oberfläche die flächige Darstellung eingebracht ist, aufgebrachten Beschichtungen jeweils an die Art der zu erzeugenden Textur angepasst ist, wobei
in einem ersten Schritt ortsabhängig nur die Oberflächenschicht der Beschichtung behandelt wird, wobei die Oberflächenschicht eine Dicke zwischen 10 nm und 1 µm aufweist,
der Lack einen UV-härtbaren Lack umfasst, wobei der Lack einen Synergisten sowie einen Photoinitiator vom Typ I und einen Photoinitiator vom Typ II umfasst, sodass sich die Reaktivität an der Oberfläche des aufgetragenen Beschichtungsfilms von der Reaktivität im Volumen des aufgetragenen Beschichtungsfilms gezielt unterscheidet,
und dass zum Bestrahier der Beschichtung längerwellig UV-C-Strahlung mit einer Wellenlänge von 240 nm und mehr in mindestens einem zu texturierenden Bereich in die Oberflächenschicht der Beschichtung eingebracht wird und
dass das Bestrahlen ortsabhängig zweischrittig in der Form erfolgt, dass in einen Teilbereich des auf mindestens einen Bereich der Unterlage, auf deren Oberfläche die flächige Darstellung aufgebracht oder in deren Oberfläche die flächige Darstellung eingebracht ist, aufgebrachten fluiden Beschichtungsmaterials in einem ersten Schritt eine kleinere UV-Dosis eingestrahlt wird, die Mikrofaltung erzeugt, und in einem zweiten Schritt die Schicht im Teilbereich des fluiden Beschichtungsmaterials vollständig durchgehärtet wird, wobei für beide Härtungsschritte die längerwellige UV-C-Strahlung verwendet wird, so dass in dem bestrahlten Teilbereich der Beschichtung eine vorbestimmte Textur der Oberfläche der Beschichtung erhalten wird, welche von der Textur oder den Texturen der Oberfläche anderer Teilbereiche der Beschichtung oder in anderen Teilbereichen der Unterlage, auf deren Oberfläche die flächige Darstellung aufgebracht oder in deren Oberfläche die flächige Darstellung eingebracht ist, aufgebrachten Beschichtungen abweicht.

2. Verfahren nach Anspruch 1, wobei nach Schritt d. die mindestens eine zu erzeugende Textur veränderbar ist und/oder verändert wird.

3. Verfahren nach einem der Ansprüche 1 oder 2, wobei die mindestens eine Textur in dem mindestens einen Bereich der Unterlage, auf deren Oberfläche die flächige Darstellung aufgebracht oder in deren Oberfläche die flächige Darstellung eingebracht ist, einen visuellen und/oder haptischen Eindruck aufweist, welcher sich von dem visuellen und/oder haptischen Eindruck in einem anderen Bereich der Unterlage, auf deren Oberfläche die flächige Darstellung aufgebracht oder in deren Oberfläche die flächige Darstellung eingebracht ist, unterscheidet..

4. Verfahren nach Anspruch 1, wobei eine Vielzahl gleicher Unterlagen, auf deren Oberfläche die flächige Darstellung aufgebracht oder in deren Oberfläche die flächige Darstellung eingebracht ist, nacheinander ortsaufgelöst mit einem fluiden Beschichtungsmaterial belegt wird, und wobei die erste der Unterlage, auf deren Oberfläche die flächige Darstellung aufgebracht oder in deren Oberfläche die flächige Darstellung eingebracht ist, gescannt wird und ausgehend von der Auswertung des Datensatzes, welcher durch den Scan der ersten Unterlage, auf deren Oberfläche die flächige Darstellung aufgebracht oder in deren Oberfläche die flächige Darstellung eingebracht ist, erhalten wird, der Auftrag des fluiden Beschichtungsmaterials auf die Texturierung der Beschichtung der nachfolgenden flächigen Darstellungen erfolgt.

5. Verfahren nach einem der Ansprüche 1 bis 4, wobei die Dicke des aufgebrachten Beschichtungsmaterials ortsaufgelöst unterschiedlich ist und das Härten so erfolgt, dass über die gesamte Fläche der flächigen Darstellung die gleiche Leistung in die Beschichtung eingebracht ist.

6. Verfahren nach einem der Ansprüche 1 bis 5, wobei das Bestrahlen sowohl der Oberflächenschicht als auch das Bestrahlen zum Aushärten der Beschichtung jeweils mittels eines Quecksilber-Mitteldruckstrahlers erfolgt.

7. Verfahren nach einem der Ansprüche 5 bis 6, wobei das ortsabhängige Bestrahlen der Oberflächenschicht zur Mikrofaltung in mindestens einem Teilbereich mittels eines ortsaufgelösten Abrasterns der Beschichtungsoberfläche erfolgt.

8. Verfahren nach Anspruch 7, wobei das Abrastem scannend erfolgt, indem zeilenweise die Oberfläche überfahren wird und weiterhin die Zeile in einzelne Bildpunkte oder Pixel unterteilt ist und jede Zeile jeweils einem Vorschub des Scankopfes zugeordnet ist.

9. Verfahren nach einem der Ansprüche 1 bis 8, wobei die Bestrahlung durch UV-Strahlung unter Inertgasatmosphäre erfolgt.

10. Verfahren nach Anspruch 9, wobei der Restsauerstoffgehalt kleiner als 5000 ppm ist.

11. Verfahren nach einem der Ansprüche 1 bis 10, wobei das Auftragen des fluiden Beschichtungsmaterials durch einen Druckprozess erfolgt.

12. Vorrichtung (1) zum Erzeugen einer texturierten Beschichtung, umfassend
a. eine Vorrichtung (301) zur Aufnahme einer Unterlage (3),
b. Ein Mittel (21,22,23,24) zum Transport der Unterlage zwischen den einzelnen Arbeitsstationen,
c. ein Mittel (9) zum Scannen einer flächigen Darstellung, in Form eines Farbsensors, wobei das Mittel ortsaufgelöst Parameter der flächigen Darstellung erfasst, so dass ein digitalisierter Datensatz erhalten wird, sowie ein Mittel zum Erfassen eines Höhenprofils einer flächigen Darstellung,
d. Ein informatisches Mittel (5) zum Speichern und Auswerten eines digitalisierten Datensatzes einer flächigen Darstellung,
e. Eine Vorrichtung (4) zum Aufbringen von Druckfarbe auf die Unterlage,
f. Eine Vorrichtung (4) zum Aufbringen eines farblosen Lacks auf die Oberfläche der Unterlage, wobei die Vorrichtung dergestalt ausgestaltet sein kann, dass der Lack über den gesamten Bereich der Oberfläche der Unterlage oder nur über einen Teilbereich derselben aufgetragen wird,
g. Eine Vorrichtung (7) zum Aushärten der Beschichtung mit längerwelliger UV-C-Strahlung mit einer Wellenlänge von 240 nm und mehr, wobei die Vorrichtung so ausgestaltet ist, dass sich das Aushärter ortsabhängig vollzieht und die mittels der Vorrichtung zum Aushärten ortsabhängig in die Beschichtung eingebrachte Leistung so einstellbar ist, dass in einem ersten Schritt ortsabhängig nur die Oberflächenschicht der Beschichtung ortsabhängig behandelt wird, wobei die Oberflächenschicht eine Dicke zwischen 10 nm und mm aufweist, und in einem zweiten Schritt die Beschichtung ortsabhängig über die gesamte Dicke ausgehärtet wird,
h. eine Vorrichtung (302) zur Entnahme der Unterlage, sowie
i. eine Anlagensteuerung (5), in Form eines informatischen Mittels wie eines Computers, zur Steuerung der Arbeitsschritt der Vorrichtung, welches die Parameter über alle Verfahrensschritte steuert und deren Zusammenwirken sicherstellt,
wobei die Vorrichtung so ausgestaltet ist,
dass ein UV-härtbarer Lack, welcher einen Synergisten sowie einen Photoinitiator vom Typ I und einen Photoinitiator vom Typ II umfasst, sodass sich die Reaktivität an der Oberfläche des aufgetragenen Beschichtungsfilms von der Reaktivität im Volumen des aufgetragenen Beschichtungsfilms gezielt unterscheidet, aufgebracht werden kann, und dass das Aufbringen des Lacks auf den mindestens einen Bereich der flächigen Darstellung so erfolgt, dass der Lack ortsabhängig so aufgebracht wird, dass die Dicke der Beschichtung und/oder die Härtung der Beschichtung spezifisch auf die Art
der zu erzeugenden Textur der
der Oberfläche einer Lackschicht angepasst ist,
und das Bestrahlen ortsabhängig zweischrittig in der Form erfolgt, dass in einen Teilbereich des auf mindestens einen Bereich der flächigen Darstellung aufgebrachten fluiden Beschichtungsmaterials in einem ersten Schritt eine kleinere UV-Dosis eingestrahlt wird, die Mikrofaltung erzeugt, und in einem zweiten Schritt die Schicht im Teilbereich des fluiden Beschichtungsmaterials vollständig durchgehärtet wird, wobei für beide Härtungsschritte die längerwellige UV-C-Strahlung verwendet wird, so dass in dem bestrahlten Teilbereich der Beschichtung eine vorbestimmte Textur der Oberfläche der Beschichtung erhalten wird, welche von der Textur oder den Texturen der Oberfläche anderer Teilbereiche der Beschichtung oder in anderen Teilbereichen der Unterlage, auf deren Oberfläche die flächige Darstellung aufgebracht oder in deren Oberfläche die flächige Darstellung eingebracht ist, aufgebrachten Beschichtungen abweicht

13. Vorrichtung nach Anspruch 12, umfassend ein Mittel, um Parameter in einem informatischen Format, welches in der Druckindustrie allgemein verwendet wird, wie dem JDF (Job Definition Format) auszulesen und in Verfahrensschritte umzusetzen.

14. Vorrichtung nach einem der Ansprüche 12 oder 13, umfassend zumindest jeweils einen Sensor sowie einen Encoder und Aktoren, um die jeweiligen Verfahrensschritte sensorisch zu erfassen und gesteuert durch den Computer mittels entsprechender Aktoren jeweils umzusetzen.

15. Vorrichtung nach einem der Ansprüche 12 bis 14, welche als kompaktes Gerät ausgestaltet ist.

## Claims

1. A method for producing a textured coating, comprising the steps of:
(a) providing a two-dimensional representation, the two-dimensional representation being in embodied form, and scanning the two-dimensional representation to obtain a digitized data set in the form of a digital file, including spatially resolved and/or location-dependent colour information of the two-dimensional representation and information about the surface texture and/or surface relief;
(b) evaluating the data set of the two-dimensional representation by a computerised means,
(c) so as to determine, based thereon, local structures of a two-dimensional visual representation of the two-dimensional representation;
(d) determining the type and location of at least one texture to be produced on at least one area (32, 33, 34, 35, 36) of the two-dimensional representation, such that the surface texture sensed in addition to the colour information of the two-dimensional representation and/or the additionally sensed surface relief of the two-dimensional representation are translated into texture information that can be transferred by the coating unit;
(e) providing a substrate (3);
(f) applying ink onto the substrate based on the evaluation of the colour information of the two-dimensional representation;
(g) providing a varnish, said varnish being colourless;
(h) applying the varnish onto the substrate to which the ink was applied in step (f), wherein said varnish is applied in a location-dependent manner such that the thickness of the coating and/or the curing of the coating is specifically adapted to the type of coating texture to be produced; and
(i) a step of curing the applied varnish, wherein said curing is effected in a location-dependent manner, wherein the duration of the curing and/or the manner of the curing in different areas of an applied coating and/or in different partial areas of the substrate which has the two-dimensional representation applied thereon or which has the two-dimensional representation introduced therein is adapted to the respective type of the texture to be produced; wherein
in a first step, only the surface layer of the coating is treated in a location-dependent manner, said surface layer having a thickness of between 10 nm and 1 µm,
wherein the varnish comprises a UV curable varnish, said varnish comprising a synergist and a type I photoinitiator and a type II photoinitiator, such that the reactivity at the surface of the applied coating film selectively differs from the reactivity in the volume of the applied coating film; and
wherein for irradiating the coating, longer wavelength UV-C radiation with a wavelength of 240 nm and more is introduced into the surface layer of the coating in at least one area to be textured; and
wherein the irradiating is performed in two steps in a location-dependent manner, by irradiating, in a first step, a smaller UV dose to a partial area of the fluid coating material that has been applied to at least one area of the substrate which has the two-dimensional representation applied on the surface thereof or has the two-dimensional representation introduced in the surface thereof, thereby producing microfolding, and in a second step, the layer in said partial area of the fluid coating material is completely cured, and wherein the longer wavelength UV-C radiation is used for both curing steps, so that in the irradiated partial area of the coating a predefined texture of the surface of the coating is obtained, which differs from the texture or textures of the surface of applied coatings in other partial areas of the coating or in other partial areas of the substrate which has the two-dimensional representation applied on the surface thereof or which has the two-dimensional representation introduced into the surface thereof.

2. The method according to claim 1, wherein the at least one texture to be produced can be modified and/or is modified following step (d).

3. The method according to claim 1 or 2, wherein the at least one texture in said at least one area of the substrate which has the two-dimensional representation applied on the surface thereof or which has the two-dimensional representation introduced into the surface thereof, exhibits a visual and/or haptic appearance, which differs from the visual and/or haptic appearance in a further area of the substrate which has the two-dimensional representation applied on the surface thereof or which has the two-dimensional representation introduced into the surface thereof.

4. The method according to claim 1, wherein a multitude of identical substrates which have the two-dimensional representation applied on the surface thereof or which have the two-dimensional representation introduced into the surface thereof, are successively covered with a fluid coating material in a spatially resolved manner, and wherein the first one of the substrates which has the two-dimensional representation applied on the surface thereof or which has the two-dimensional representation introduced into the surface thereof, is scanned, and the application of the fluid coating material on the texture of the coating of the subsequent two-dimensional representations is effected on the basis of the evaluation of the data set that is obtained by the scanning of the first substrate which has the two-dimensional representation applied on the surface thereof or which has the two-dimensional representation introduced into the surface thereof.

5. The method according to any one of claims 1 to 4, wherein the thickness of the applied coating material is different in a spatially resolved manner, and wherein the curing is effected such that the same output power is introduced into the coating over the entire area of the two-dimensional representation.

6. The method according to any one of claims 1 to 5, wherein the irradiating of the surface layer as well as the irradiating for curing the coating is performed using a medium-pressure mercury lamp in each case.

7. The method according to any one of claims 5 to 6, wherein the irradiating of the surface layer in a location-dependent manner for the purpose of microfolding is performed by scanning over the coating surface in a spatially resolved manner in at least one partial area.

8. The method according to claim 7, wherein the scanning is effected by sweeping over the surface line by line, and wherein furthermore each line is subdivided into individual image points or pixels and each line is associated with a respective advancement of the scanning head.

9. The method according to any one of claims 1 to 8, wherein the irradiating by UV radiation is effected under an inert gas atmosphere.

10. The method according to claim 9, wherein the residual oxygen content is less than 5000 ppm.

11. The method according to any one of claims 1 to 10, wherein the application of the fluid coating material is effected by a printing process.

12. An apparatus (1) for producing a textured coating, comprising
(a) a device (301) for receiving a substrate (3);
(b) means (21, 22, 23, 24) for transferring the substrate between the individual processing stations;
(c) a means (9) for scanning a two-dimensional representation, in the form of a colour sensor, wherein said means acquires parameters of the two-dimensional representation in a spatially resolved manner such that a digitized data set is obtained, and a means for sensing a height profile of a two-dimensional representation;
(d) a computerised means (5) for storing and evaluating a digitized data set of a two-dimensional representation;
(e) a device (4) for applying printing ink onto the substrate;
(f) a device (4) for applying a colourless varnish onto the surface of the substrate, wherein said device can be adapted to apply the varnish over the entire surface area of the substrate or only over a partial area thereof;
(g) a device (7) for curing the coating using longer wavelength UV-C radiation with a wavelength of 240 nm and more, wherein said device is adapted such that the curing occurs in a location-dependent manner and wherein the output power introduced into the coating in a location-dependent manner by said curing device can be adjusted such that, in a first step, only the surface layer of the coating is treated in a location-dependent manner, said surface layer having a thickness of between 10 nm and 1 µm, and such that, in a second step, the coating is cured over the entire thickness in a location-dependent manner;
(h) a device (302) for removing the substrate; and
(i) a system controller (5) in the form of a computerised system such as a computer for controlling the processing steps of the apparatus, which controls the parameters for all method steps and ensures their interaction;
wherein the apparatus is adapted
such that a UV curable varnish can be applied, which contains a synergist and a type I photoinitiator and a type II photoinitiator such that the reactivity at the surface of the applied coating film selectively differs from the reactivity in the volume of the applied coating film;
and such that the varnish is applied to the at least one area of the two-dimensional representation in such a manner that the varnish is applied in a location-dependent manner such that the thickness of the coating and/or the curing of the coating is specifically adapted to the type of texture to be produced on the surface of a varnish layer;
and wherein the irradiation is performed in two steps in a location-dependent manner, by irradiating, in a first step, a smaller UV dose into a partial area of the fluid coating material that has been applied to at least one area of the substrate, thereby producing microfolding, and in a second step, the layer in said partial area of the fluid coating material is completely cured, wherein the longer wavelength UV-C radiation is used for both curing steps, so that in the irradiated partial area of the coating a predefined surface texture of the coating is obtained, which differs from the surface texture or textures of the surface of applied coatings of other partial areas of the coating or in other partial areas of the substrate which has the two-dimensional representation applied on the surface thereof or which has the two-dimensional representation introduced into the surface thereof.

13. The apparatus according to claim 12, comprising means for retrieving parameters in a computerised format that is commonly used in the printing industry, such as the JDF (Job Definition Format), and for implementing them into method steps.

14. The apparatus according to any one of claims 12 or 13, comprising at least one sensor and one encoder and respective actuators in order to sensorically capture the respective method steps and to implement them under computer control using respective actuators.

15. The apparatus according to any one of claims 12 to 14, which is in the form of a compact device.

## Revendications

1. Procédé pour produire un revêtement texturé, comprenant les étapes suivantes consistant à :
a. fournir une représentation plane, la représentation plane étant présente sous forme incarnée, et scanner la représentation plane, afin d'obtenir un ensemble de données numérisées sous forme d'un fichier numérique, comprenant des informations de couleur avec résolution spatiale et/ou en fonction de l'emplacement de la représentation plane ainsi que des informations relatives à la texture de surface et/ou relatives au relief de surface,
b. évaluer l'ensemble de données de la représentation plane à l'aide d'un moyen informatique
c. de sorte que, sur la base de celles-ci, des structures locales d'une représentation visuelle plane de la représentation plane sont définies,
d. définir un type et un emplacement d'au moins une texture à produire sur au moins une zone (32, 33, 34, 35, 36) de la représentation plane, de sorte que la texture de surface acquise en plus de l'information de couleur de la représentation plane et/ou le relief de surface de la représentation plane acquis en plus sont traduits en une information de texture pouvant être transmise avec l'unité de revêtement,
e. fournir un support (3),
f. appliquer une encre sur le support sur la base de l'évaluation de l'information de couleur de la représentation plane,
g. fournir un vernis, le vernis étant incolore,
h. appliquer le vernis sur le support, sur lequel l'encre a été appliquée à l'étape f., le vernis étant appliqué en fonction de l'emplacement, de sorte que l'épaisseur du revêtement et/ou le durcissement du revêtement est adapté(e) de manière spécifique au type de texture à produire du revêtement, ainsi que
i. une étape du durcissement du vernis appliqué, le durcissement s'effectuant en fonction de l'emplacement, où la durée du durcissement et/ou le type du durcissement de revêtements appliqués dans différentes zones d'un revêtement appliqué et/ou dans différentes zones partielles du support, sur la surface duquel la représentation plane est appliquée ou dans la surface duquel la représentation plane est introduite, est adapté(e) respectivement au type de la texture à produire,
dans lequel
au cours d'une première étape en fonction de l'emplacement seule la couche superficielle du revêtement est traitée, la couche superficielle présentant une épaisseur comprise entre 10 nm et 1 µm,
le vernis comprend un vernis durcissable aux UV, le vernis comprenant un agent synergiste ainsi qu'un photoinitiateur de type I et un photoinitiateur de type II, de sorte que la réactivité à la surface du film de revêtement appliqué se différencie de manière ciblée de la réactivité dans le volume du film de revêtement appliqué,
et que pour l'exposition aux rayonnements du revêtement un rayonnement UV-C à longueur d'onde avec une longueur d'onde supérieure ou égale à 240 nm est introduit dans au moins une zone à texturer dans la couche superficielle du revêtement et
que l'exposition au rayonnement s'effectue en deux étapes en fonction de l'emplacement, de telle sorte que dans une zone partielle du matériau de revêtement fluide appliqué sur au moins une zone du support, sur la surface duquel la représentation plane est appliquée ou dans la surface duquel la représentation plane est introduite, au cours d'une première étape, une plus faible dose d'UV soit injectée, qui produit un micropli, et dans une deuxième étape, la couche dans la zone partielle du matériau de revêtement fluide soit entièrement durcie, où pour les deux étapes de durcissement le rayonnement UV-C à longueur d'onde est utilisé, de sorte que dans la zone partielle du revêtement exposée au rayonnement une texture prédéfinie de la surface du revêtement est obtenue, laquelle diffère de la texture ou des textures de la surface d'autres zones partielles du revêtement ou dans d'autres zones partielles des revêtements appliqués du support, sur la surface duquel la représentation plane est appliquée ou dans la surface duquel la représentation plane est introduite.

2. Procédé selon la revendication 1, dans lequel, après l'étape d., l'au moins une texture à produire peut être modifiée et/ou est modifiée.

3. Procédé selon l'une quelconque des revendications 1 ou 2, dans lequel l'au moins une texture dans l'au moins une zone du support, sur la surface duquel la représentation plane est appliquée ou dans la surface duquel la représentation plane est introduite, présente une impression visuelle et/ou haptique, laquelle se différencie de l'impression visuelle et/ou haptique dans une autre zone du support sur la surface duquel la représentation plane est appliquée ou dans la surface duquel la représentation plane est introduite.

4. Procédé selon la revendication 1, dans lequel une pluralité de supports identiques, sur la surface desquels la représentation plane est appliquée ou dans la surface desquels la représentation plane est introduite, est recouverte d'un matériau de revêtement fluide de manière successive avec une résolution spatiale, et dans lequel le premier du support sur la surface duquel la représentation plane est appliquée ou dans la surface duquel la représentation plane est introduite, est scanné et à partir de l'évaluation de l'ensemble de données, lequel est obtenu par le scannage du premier support sur la surface duquel la représentation plane est appliquée ou dans la surface duquel la représentation plane est introduite, l'application du matériau de revêtement fluide s'effectue sur la texturation du revêtement des représentations planes suivantes.

5. Procédé selon l'une quelconque des revendications 1 à 4, dans lequel l'épaisseur du matériau de revêtement appliqué est différente avec une résolution spatiale et le durcissement s'effectue de sorte que sur toute la surface de la représentation plane la même puissance est introduite dans le revêtement.

6. Procédé selon l'une quelconque des revendications 1 à 5, dans lequel l'exposition au rayonnement de la couche superficielle aussi bien que l'exposition au rayonnement pour le durcissement du revêtement s'effectue respectivement au moyen d'une lampe moyenne pression au mercure.

7. Procédé selon l'une quelconque des revendications 5 à 6, dans lequel l'exposition au rayonnement en fonction de l'emplacement de la couche superficielle pour le micropli s'effectue dans au moins une zone partielle au moyen d'un balayage avec résolution spatiale de la surface de revêtement.

8. Procédé selon la revendication 7, dans lequel le balayage s'effectue par scannage, du fait que la surface est parcourue ligne par ligne et en outre la ligne est divisée en points d'image ou pixels individuels et chaque ligne est associée à respectivement un avancement de la tête de scannage.

9. Procédé selon l'une quelconque des revendications 1 à 8, dans lequel l'exposition au rayonnement par un rayonnement UV s'effectue sous atmosphère au gaz inerte.

10. Procédé selon la revendication 9, dans lequel la teneur en oxygène résiduel est inférieure à 5000 ppm.

11. Procédé selon l'une quelconque des revendications 1 à 10, dans lequel l'application du matériau de revêtement fluide s'effectue par un processus d'impression.

12. Dispositif (1) pour produire un revêtement texturé, comprenant
a. un dispositif (301) pour la réception d'un support (3),
b. un moyen (21, 22, 23, 24) pour le transport du support entre les stations de travail individuelles,
c. un moyen (9) pour scanner une représentation plane, sous forme d'un capteur de couleur, le moyen acquérant avec une résolution spatiale des paramètres de la représentation plane, de sorte qu'un ensemble de données numérisées est obtenu, ainsi qu'un moyen pour acquérir un profil de hauteur d'une représentation plane,
d. un moyen informatique (5) pour mettre en mémoire et évaluer un ensemble de données numérisées d'une représentation plane,
e. un dispositif (4) pour appliquer une encre d'impression sur le support,
f. un dispositif (4) pour appliquer un vernis incolore sur la surface du support, le dispositif pouvant être configuré de telle sorte que le vernis est appliqué sur toute la zone de la surface du support ou uniquement sur une zone partielle de celle-ci,
g. un dispositif (7) pour durcir le revêtement avec un rayonnement UV-C à longueur d'onde avec une longueur d'onde supérieure ou égale à 240 nm, le dispositif étant configuré de sorte que le durcissement s'effectue en fonction de l'emplacement et la puissance introduite dans le revêtement en fonction de l'emplacement au moyen du dispositif pour le durcissement peut être ajustée de sorte que dans une première étape, en fonction de l'emplacement, seule la couche superficielle du revêtement est traitée en fonction de l'emplacement, la couche superficielle présentant une épaisseur comprise entre 10 nm et 1 µm, et, dans une deuxième étape, le revêtement est durci sur toute l'épaisseur en fonction de l'emplacement,
h. un dispositif (302) pour le retrait du support, ainsi qu'une commande d'installation (5), sous forme d'un moyen informatique tel qu'un ordinateur, pour la commande de l'étape de travail du dispositif, lequel commande les paramètres concernant toutes les étapes de procédé et garantit la coopération de ceux-ci,
où le dispositif est configuré de sorte
qu'un vernis pouvant durcir aux UV, lequel comprend un agent synergiste ainsi qu'un photoinitiateur de type I et un photoinitiateur de type II, de sorte que la réactivité à la surface du film de revêtement appliqué se différencie de manière ciblée de la réactivité dans le volume du film de revêtement appliqué, peut être appliqué,
et que l'application du vernis sur l'au moins une zone de la représentation plane s'effectue de sorte que le vernis est appliqué en fonction de l'emplacement, de sorte que l'épaisseur du revêtement et/ou le durcissement du revêtement est adapté de manière spécifique au type de la texture à produire de la surface d'une couche de vernis,
et l'exposition au rayonnement s'effectue en fonction de l'emplacement en deux étapes de telle sorte que dans une zone partielle de l'au moins un matériau de revêtement fluide appliqué sur au moins une zone de la représentation plane, dans une première étape, une plus faible dose d'UV peut être injectée, qui produit un micropli, et dans une deuxième étape, la couche dans la zone partielle du matériau de revêtement fluide est entièrement durcie, où pour les deux étapes de durcissement le rayonnement UVC à longueur d'onde est utilisé, de sorte que dans la zone partielle exposée au rayonnement du revêtement une texture prédéfinie de la surface du revêtement est obtenue, laquelle diffère de la texture ou des textures de la surface d'autres zones partielles du revêtement ou dans d'autres zones partielles des revêtements appliqués du support, sur la surface duquel la représentation plane est appliquée ou dans la surface duquel la représentation plane est introduite.

13. Dispositif selon la revendication 12, comprenant un moyen pour lire des paramètres dans un format informatique, lequel est utilisé généralement dans l'industrie de l'imprimerie, comme le JDF (Job Definition Format), et les mettre en œuvre dans des étapes de procédé.

14. Dispositif selon l'une quelconque des revendications 12 ou 13, comprenant au moins respectivement un capteur ainsi qu'un codeur et des actionneurs, afin d'acquérir les étapes de procédé respectives par capteurs et de les mettre en œuvre respectivement de manière commandée par l'ordinateur au moyen d'actionneurs correspondants.

15. Dispositif selon l'une quelconque des revendications 12 à 14, lequel est configuré sous la forme d'un appareil compact.
